# EUROPEAN PATENT APPLICATION

(11) **EP 4 064 183 A1**
(43) Date of publication of application: **28.09.2022**
(21) Application number: 20889952.6
(22) Date of filing: 06.11.2020
(51) Int. Cl.: G06T 7/00, G06N 3/08, G06N 20/00, G01N 21/88

(54) **MODEL GENERATION APPARATUS, ESTIMATION APPARATUS, MODEL GENERATION METHOD, AND MODEL GENERATION PROGRAM**

(30) Priority: 21.11.2019 JP 2019210874
(71) Applicant: OMRON Corporation, Shiokoji-dori, Shimogyo-Ku Kyoto-shi Kyoto 600-8530 (JP)
(72) Inventor: YONETANI, Ryo, Tokyo 113-0033 (JP)
(74) Representative: Horn Kleimann Waitzhofer Patentanwälte PartG mbB
(86) International application number: PCT/JP2020/041453
(87) International publication number: WO 2021/100483

(57) **Abstract**

A model generation apparatus according to one aspect of the present invention acquires, with respect to each of learning data sets, background data for training data, and obtains a difference between the training data and the background data to generate differential data. Also, the model generation apparatus trains an estimator so that, with respect to each of the learning data sets, a result of estimating a feature by the estimator based on the generated differential data conforms to correct answer data.

## Description

### TECHNICAL FIELD

The present invention relates to a model generation apparatus, an estimation apparatus, a model generation method, and a model generation program.

### RELATED ART

Conventionally, in a scenario such as production lines for producing products, a technique is used in which products to be produced are shot (photographed) by a shooting (photographing) apparatus, and the quality of the products is inspected based on the obtained image data. For example, Patent Document 1 proposes an inspection apparatus that determines whether an object to be inspected in an image is normal or anomalous based on a trained first neural network, and if it is determined that the object to be inspected is anomalous, classifies the type of the anomaly based on a trained second neural network.

### RELATED ART DOCUMENTS

### PATENT DOCUMENTS

Patent Document 1: JP 2012-026982A
Patent Document 2: JP 2017-111806A
Patent Document 3: JP 2014-049118A
Patent Document 4: JP 2019-071050A
Patent Document 5: Japanese Patent No. 6264492

### SUMMARY OF THE INVENTION

### PROBLEM TO BE SOLVED BY THE INVENTION

According to an estimator configured by a trained machine learning model constructed by machine learning, it is possible to execute a task of estimation (including prediction) such as regression or classification on unknown data of the same type as that of given training data. Thus, according to a method that uses a machine learning model such as a neural network as described in Patent Document 1, it is possible to execute visual inspection of products based on an output of a trained estimator. However, the inventors of the present application have found that conventional methods as described above have a following problem.

That is to say, conventional methods collect in advance images of products including defects as learning data, in order to execute machine learning for training a machine learning model to acquire the capability of detecting a defect appearing in a given image. Detecting a defect may also include identifying the type of the defect. Basically, the accuracy of visual inspection can be improved the wider the range of learning data that is collected is, that is to say, the more the diversity of defect situations appearing in learning data is.

However, the larger the number of defect types and the number of background types (this includes the outer appearance of products) are, the larger the number of combinations of defect type and background type will be, resulting in an increase in the number (and types) of samples that should be collected as learning data. Also, the background may change when a trained estimator is operated. In order to generate a trained estimator that can execute accurate visual inspection, it is desirable to collect samples of all combinations of defect type and background type, but collecting samples of all combinations is costly. Therefore, it is conceivable to execute machine learning of a machine learning model, for example, at a stage at which samples of all combinations have not been obtained but a certain amount of learning data has been collected, such as when samples of all defect types of an object to be detected have been obtained.

However, if the learning data includes combinations for which no sample has been obtained, the following problem may occur. That is, a machine learning model is trained by machine learning to execute a desired estimation task using suitable information included in training data (samples). Therefore, if training data including defects and backgrounds is used to execute machine learning of an estimator, the generated trained estimator may have the capability of executing an estimation task relating to detection of defects, using not only defect-related information included in the data but also background-related information. In such a case, any combination of defect type and background type for which no sample has been obtained cannot be reflected on the machine learning, and thus the accuracy of estimation relating to detection of defects by the trained estimator may be reduced with respect to such combinations.

In addition, if some combinations of defect type and background type are overrepresented in samples, specifically, if samples include all defect types and background types with the same distribution, the overrepresentation of some samples may adversely affect the learning capability of a machine learning model through machine learning. Specifically, due to machine learning using samples including overrepresented combinations, the estimator may acquire the capability of identifying the background type, instead of the capability of detecting a defect according to the type.

As an example, it is assumed that two types of defects, namely, a first defect and a second defect, occur in two types of products, namely, first products and second products. Also, in this example, it is assumed that the first defect is likely to occur in the first product, and the second defect is likely to occur in the second product. Furthermore, it is assumed that obtained samples are lean to being images of the first products including the first defect, and images of the second products including the second defect. That is to say, it is assumed that images of the first products including the second defect, and images of the second products including the first defect have not been obtained as samples for machine learning. It is supposed that using samples obtained under the above-described assumptions, machine learning of a machine learning model is executed, aiming to train the machine learning model to acquire the capability of detecting a defect according to the type. In this case, due to the overrepresentation in the obtained samples, the machine learning model may learn, through the machine learning, the capability of identifying the type of background, instead of the capability of detecting and identifying a defect according to the type. That is, the overrepresentation of some samples may cause the machine learning model to learn another capability different from the intended capability. If the machine learning model has learned the capability of identifying the type of background, the trained estimator will erroneously detect that the first product has the first defect when an image of the first product including the second defect is given.

Accordingly, in conventional methods, a trained estimator may be constructed by machine learning to execute an estimation task relating to defect detection, taking into consideration background-related information included in image data. Therefore, there is a problem that, due to the difference between backgrounds in operation and backgrounds in learning, the accuracy of the estimation relating to defect detection by a trained estimator may be reduced. In other words, there is the problem that it is difficult to generate a trained estimator that is robust against differences in backgrounds.

Note that such a problem is not specific to scenarios of generating a trained estimator that can be used for visual inspection of products. This problem may occur in various scenarios of estimating some feature included in image data. Scenarios of estimating some feature included in image data are scenarios of performing estimation relating to a foreground of image data, for example. Scenarios of performing estimation relating to a foreground may include estimating an attribute of an object included in image data, for example.

As a specific example, Patent Document 2 proposes that a trained neural network is used to recognize number plates. Patent Document 3 proposes that a trained convolution neural network is used to identify letters. Patent Document 4 proposes that a trained neural network is used to estimate a density distribution and a distribution of movement vectors of people in a shot image. Patent Document 5 proposes that a trained model is used to estimate the degree of concentration of a driver on driving from a shot image.

Also in such scenarios, in conventional methods, when a trained estimator for executing an estimation task relating to a feature of an object is constructed by machine learning, the trained estimator may be constructed to execute the estimation task, taking into consideration information relating to backgrounds included in the image data. Therefore, there is the problem that it is difficult to generate a trained estimator that is robust against differences in backgrounds.

The present invention has been made in view of the foregoing circumstances, and it is an object thereof to provide a technique for generating a trained estimator that can execute an estimation task relating to a feature of an object included in image data, and that is robust against differences in backgrounds.

### MEANS FOR SOLVING THE PROBLEMS

The present invention adopts the following configuration in order to solve the problems stated above.

That is to say, according to an aspect of the present invention, a model generation apparatus includes: a first data acquisition unit configured to acquire a plurality of learning data sets each constituted by a combination of training data that is image data, and correct answer data that indicates a feature included in the training data; a background acquisition unit configured to acquire, with respect to each of the learning data sets, background data that indicates a background of the training data; a difference calculation unit configured to obtain, with respect to each of the learning data sets, a difference between the acquired background data and the training data to generate differential data that indicates the difference between the background data and the training data; and a first training unit configured to execute machine learning of an estimator, the execution of the machine learning of the estimator including training the estimator so that, with respect to each of the learning data sets, a result of estimating the feature by the estimator based on the generated differential data conforms to the correct answer data.

In the model generation apparatus according to this configuration, by subtracting background data from training data with respect to each of the learning data sets, differential data for training from which the background is removed is generated. By machine learning using the generated differential data for training, the estimator is trained to estimate a feature of an object based on training data from which information on the background data is removed. With this, it is possible to generate a trained estimator that has acquired the capability of executing an estimation task relating to a feature of an object, without using the information on the background data that was removed through the difference calculation. That is to say, when the estimation task relating to a feature of an object is executed by a trained estimator, it is possible for information corresponding to background data not to be taken into consideration. Thus, according to the model generation apparatus with this configuration, it is possible to generate a trained estimator that can execute an estimation task relating to a feature of an object included in image data, and is robust against differences in backgrounds.

In the model generation apparatus according to one aspect, the acquiring the background data may include generating the background data for the training data with respect to each of the learning data sets, using a machine learned generator. For example, if a variation occurs even for the same type of backgrounds, such as when shooting positions are shifted, it is costly to prepare in advance background data that corresponds to each variation. Also, if a difference is calculated in disregard of a variation, almost all of information relating to a background will remain in the obtained differential data, resulting in a possibility that it is not possible to appropriately generate a trained estimator that is robust against differences in backgrounds. In contrast, according to this configuration, by using a machine learned generator, it is possible to generate background data that corresponds to training data even when a variation occurs in background. Therefore, it is possible to reduce the cost for preparing background data. Also, it is possible to appropriately generate a trained estimator that is robust against differences in backgrounds.

The model generation apparatus according to the one aspect may further include: a second data acquisition unit configured to acquire learning background data; and a second training unit configured to execute machine learning using the acquired learning background data, and construct the machine learned generator trained to generate the background data for the training data. With this configuration, it is possible to appropriately construct a machine learned generator capable of generating the background data that corresponds to the training data. Accordingly, by using the constructed machine learned generator, it is possible to reduce the cost for preparing background data that corresponds to training data, with respect to each of the learning data sets. Also, it is possible to appropriately generate a trained estimator that is robust against differences in backgrounds. Note that image data having the same type of background as that of the training data is used as the learning background data.

In the model generation apparatus according to the one aspect, the difference calculation unit may generate the differential data by obtaining, based on correlation between an object region including pixels of the training data and pixels surrounding these pixels, and a corresponding region including corresponding pixels of the background data and pixels surrounding these pixels, a difference between each of the pixels of the training data and a corresponding pixel of the background data. Due to effects such as noise, there is a possibility that an error occurs between the background data and the background included in training data. Specifically, this possibility is high when the background data is generated by a machine learned generator. In contrast, in this configuration, by calculating a difference between pixels of an object based on correlation between regions including pixels of the object, it is possible to generate differential data so that an error is less likely to remain than if the differential data is obtained by a simple difference calculation. Accordingly, it is possible to appropriately generate a trained estimator that is robust against differences in backgrounds, even if an error occurs in background data.

The model generation apparatus according to the one aspect may relate to a foreground of the training data. With this configuration, it is possible to generate a trained estimator that can execute an estimation task relating to a foreground in a way that is robust against differences in backgrounds. Note that the background and the foreground may be selected as appropriate from items that can be included in image data.

In the model generation apparatus according to the one aspect, the training data may be the image data including an image of an object, and the feature may be an attribute of the object. With this configuration, it is possible to generate a trained estimator that can execute an estimation task relating to the attribute of an object in a way that is robust against differences in backgrounds. Note that the object may be appropriately selected. The object may be, for example, a product, a package of a product, a number plate, a moving object (such as, e.g., an automobile or a person) capable of moving within a shooting range, a driver who drives an automobile, or the like.

In the model generation apparatus according to the aspect, the object may be a product, and the attribute of the object may relate to a defect of the product. With this configuration, it is possible to generate a trained estimator that can execute an estimation task relating to a defect in a way that is robust against differences in backgrounds in a scenario of executing visual inspection.

The mode of the present invention is not limited to the mode of the model generation apparatus. An aspect of the present invention may be an apparatus that uses a trained estimator generated by the model generation apparatus. For example, an aspect of the present invention may be an estimation apparatus configured to execute an estimation task relating to a feature of an object on object image data, using the trained generator generated by the model generation apparatus. This estimation apparatus may be replaced by an inspection apparatus, an identification apparatus, a monitoring apparatus, a diagnosis apparatus, a prediction apparatus, or the like, depending on the type of an estimation task in the applied scenario.

For example, according to one aspect of the present invention, an estimation apparatus includes: a data acquisition unit configured to acquire object image data; a background acquisition unit configured to acquire object background data that corresponds to the object image data; a difference calculation unit configured to obtain a difference between the object image data and the object background data to generate object differential data; an estimation unit configured to estimate a feature included in the generated object differential data, using a machine learned estimator generated by the model generation apparatus according to any one of the aspects; and an output unit configured to output information relating to a result of estimating the feature.
According to this configuration, it is possible to execute an estimation task relating to a feature of an object in a way that is robust against differences in backgrounds.

As an aspect other than the model generation apparatus and the estimation apparatus according to the modes described above, one aspect of the invention may also be an information processing method for realizing all or some of the configurations described above, a program, or a storage medium that stores such a program, and can be read by an apparatus or a machine such as a computer. Here, the storage medium that can be read by a computer or the like is a medium that stores information such as programs via an electrical, magnetic, optical, mechanical, or chemical effect. Also, one aspect of the invention may be an estimation system constituted by the model generation apparatus and the estimation apparatus according to any one of the modes described above.

For example, the model generation method according to one aspect of the present invention is an information processing method in which a computer executes: a step of acquiring a plurality of learning data sets each constituted by a combination of training data that is image data, and correct answer data that indicates a feature included in the training data; a step of acquiring, with respect to each of the learning data sets, background data that indicates a background of the training data; a step of obtaining, with respect to each of the learning data sets, a difference between the acquired background data and the training data to generate differential data that indicates the difference between the background data and the training data; and a step of executing machine learning of an estimator, the execution of the machine learning of the estimator including training the estimator so that, with respect to each of the learning data sets, a result of estimating a feature by the estimator based on the generated differential data conforms to the correct answer data.

For example, according to one aspect of the present invention, a model generation program for causing a computer to execute: a step of acquiring a plurality of learning data sets each constituted by a combination of training data that is image data, and correct answer data that indicates a feature included in the training data; a step of acquiring, with respect to each of the learning data sets, background data that indicates a background of the training data; a step of obtaining, with respect to each of the learning data sets, a difference between the acquired background data and the training data to generate differential data that indicates the difference between the background data and the training data; and a step of executing machine learning of an estimator, the execution of the machine learning of the estimator including training the estimator so that, with respect to each of the learning data sets, a result of estimating a feature by the estimator based on the generated differential data conforms to the correct answer data.

### EFFECTS OF THE INVENTION

According to the present invention, it is possible to generate a trained estimator that can execute an estimation task relating to a feature of an object included in image data, and is robust against differences in backgrounds.

### BRIEF DESCRIPTION OF THE DRAWINGS

- Fig. 1: schematically illustrates an example of a scenario to which the present invention is applied.
- Fig. 2: schematically illustrates an example of a hardware configuration of a model generation apparatus according to an embodiment.
- Fig. 3: schematically illustrates an example of a hardware configuration of an estimation apparatus according to an embodiment.
- Fig. 4A: schematically illustrates an example of a software configuration of the model generation apparatus according to the embodiment.
- Fig. 4B: schematically illustrates an example of a software configuration of the model generation apparatus according to the embodiment.
- Fig. 4C: schematically illustrates an example of a software configuration of the model generation apparatus according to the embodiment.
- Fig. 5: schematically illustrates an example of a software configuration of the estimation apparatus according to the embodiment.
- Fig. 6A: illustrates an example of a processing procedure relating to generation of a trained generator by the model generation apparatus according to the embodiment.
- Fig. 6B: illustrates an example of a processing procedure of machine learning of the generator according to the embodiment.
- Fig. 7: illustrates an example of a processing procedure relating to generation of a trained input estimator by the model generation apparatus according to the embodiment.
- Fig. 8: illustrates an example of a processing procedure relating to generation of a trained estimator by the model generation apparatus according to the embodiment.
- Fig. 9: schematically illustrates an example of a method for calculating a difference between training data and background data.
- Fig. 10: illustrates an example of a processing procedure of the estimation apparatus according to the embodiment.
- Fig. 11: schematically illustrates an example of another scenario to which the present invention is applied.
- Fig. 12A: schematically illustrates an example of a hardware configuration of an inspection apparatus according to another embodiment.
- Fig. 12B: schematically illustrates an example of a software configuration of the inspection apparatus according to the other embodiment.
- Fig. 13: schematically illustrates an example of another scenario to which the present invention is applied.
- Fig. 14: schematically illustrates an example of another scenario to which the present invention is applied.
- Fig. 15: schematically illustrates an example of another scenario to which the present invention is applied.
- Fig. 16: schematically illustrates an example of another scenario to which the present invention is applied.
- Fig. 17: schematically illustrates an example of a configuration of a generator according to another embodiment.

### EMDODIMENTS OF THE INVENTION

Hereinafter, an embodiment according to one aspect of the present invention (hereinafter, referred to also as "the present embodiment") will be described based on the drawings. However, the present embodiment described below is merely an example of the present invention in every respect. Needless to say, various improvements or modifications may be made without departing from the scope of the present invention. That is to say, to implement the present invention, a specific configuration corresponding to that implementation may also be employed as appropriate. Note that, although data that is used in the embodiment is described using natural language, more specifically, the data is defined by pseudo language that can be recognized by a computer, such as commands, parameters, and machine language.

### 1. Application Example

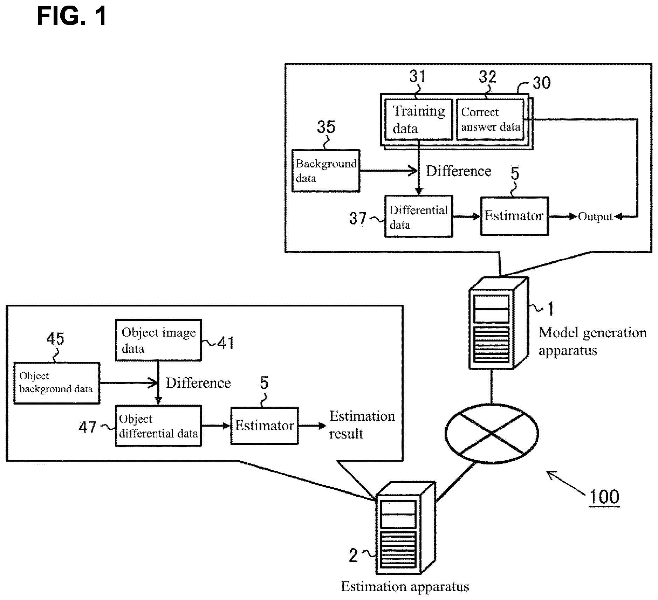

Fig. 1 schematically illustrates an example of a scenario to which the present invention is applied. As shown in Fig. 1, an estimation system 100 according to the present embodiment includes a model generation apparatus 1 and an estimation apparatus 2.

The model generation apparatus 1 according to the present embodiment is a computer configured to execute machine learning of an estimator 5. Specifically, the model generation apparatus 1 according to the present embodiment acquires a plurality of learning data sets 30. Each of the learning data sets 30 is constituted by a combination of training data 31 and correct answer data 32 that indicates a feature included in the training data 31.

The training data 31 is constituted by samples of image data. The training data 31 may also be referred to as "training samples", "image samples", or simply as "samples", for example. The feature may be appropriately selected. For example, the feature may also be a feature relating to a component (element) that can directly or indirectly appear in image data. "Directly appearing" means that a feature appears in image data. "Indirectly appearing" means that a feature is derived from an event appearing in image data.

The correct answer data 32 indicates a correct answer of an estimation task relating to a feature of an object. The correct answer data 32 may also be referred to as "teacher signal", "label", or the like. "Estimation" may be replaced by "inference". Estimating may be either deriving a discrete value (e.g., a class corresponding to a specific feature) by grouping (classification, identification) or deriving a continuous value (e.g., probability that a specific feature is present) by regression, for example. Estimating may also include performing some sort of approval such as detection or determination, based on a result of the grouping or regression. Also, estimating may also include predicting.

The model generation apparatus 1 according to the present embodiment acquires background data 35 that indicates a background of the training data 31 with respect to each of the learning data sets 30. A background may also be appropriately selected from appropriate components other than a feature that is included in image data and is to be subjected to an estimation task. A background may also be constituted by all or some of the components other than a feature of an object. The model generation apparatus 1 according to the present embodiment obtains a difference between the acquired background data 35 and the training data 31 with respect to each of the learning data sets 30 to generate differential data 37. The generated differential data 37 indicates (represents) the difference between the background data 35 and the training data 31.

The model generation apparatus 1 according to the present embodiment executes machine learning of the estimator 5 using the generated differential data 37. The estimator 5 is configured to accept an input of image data (samples), estimate a feature of an object included in the input image data, and output an output value that corresponds to a result of the estimation. The formats of inputs and outputs of the estimator 5 may be determined as appropriate according to an estimation task. The estimator 5 is constituted by a machine learning model (learner) that includes computation parameters that are used in computation and are adjusted by machine learning. The type of the machine learning model constituting the estimator 5 is not particularly limited, and may be selected as appropriate depending on the embodiment. As will be described later, in the present embodiment, a neural network is used as the estimator 5.

Executing machine learning according to the present embodiment includes training the estimator 5 so that, with respect to each of the learning data sets 30, a result of estimating a feature by the estimator 5 based on the generated differential data 37 conforms to the correct answer data 32. By executing the machine learning, the model generation apparatus 1 according to the present embodiment can generate a trained estimator 5 that has acquired the capability of estimating a feature included in the image data. Note that "trained" may also be referred to as "machine learned", or simply as "learned" or the like. Also, the model generation apparatus 1 according to the present embodiment may also be referred to simply as "generation apparatus", "learning apparatus", or the like.

On the other hand, the estimation apparatus 2 according to the present embodiment is a computer configured to execute an estimation task relating to a feature of an object on image data, using the machine learned estimator 5 generated by the model generation apparatus 1. Specifically, the estimation apparatus 2 according to the present embodiment acquires object image data 41 to be subjected to an estimation task. The object image data 41 may also be referred to as "object samples", "image samples", or simply as "samples", for example. The estimation apparatus 2 acquires object background data 45 that corresponds to the object image data 41. The estimation apparatus 2 obtains a difference between the object image data 41 and the object background data 45 to generate object differential data 47. The estimation apparatus 2 estimates a feature included in the generated object differential data 47, using the machine learned estimator 5 generated by the model generation apparatus 1. Also, the estimation apparatus 2 outputs information relating to the result of estimating a feature.

As described above, in the present embodiment, by machine learning using the differential data 37 for training, the estimator 5 is trained to estimate, from the training data 31 from which information on the background data 35 is excluded, a feature of an object so that it conforms to the correct answer data 32. As a result, the trained estimator 5 can acquire the capability of executing an estimation task relating to a feature of an object, without using the information on the background data 35 that was excluded through the difference calculation. That is to say, when an estimation task relating to a feature of an object is executed by the trained estimator 5, it is possible for the information corresponding to the background data 35 not to be taken into consideration. Thus, the model generation apparatus 1 according to the present embodiment can generate a trained estimator 5 that can execute an estimation task relating to a feature of an object included in image data, and is robust against differences in backgrounds. In the estimation apparatus 2 according to the present embodiment, the generated trained estimator 5 can be used to execute an estimation task relating to a feature of an object in a way that is robust against differences in backgrounds.

Note that, in the example shown in Fig. 1, the model generation apparatus 1 and the estimation apparatus 2 are connected to each other via a network. The type of the network may be selected as appropriate from, for example, the Internet, a wireless communication network, a mobile communication network, a telephone network, a dedicated network, and the like. Note, however, that the method for exchanging data between the model generation apparatus 1 and the estimation apparatus 2 is not limited to this example, and may be selected as appropriate depending on the embodiment. For example, data may be exchanged between the model generation apparatus 1 and the estimation apparatus 2, using a storage medium.

Also, in the example shown in Fig. 1, the model generation apparatus 1 and the estimation apparatus 2 are constituted by separate computers. However, the configuration of the estimation system 100 according to the present embodiment is not limited to this example, and may be selected as appropriate depending on the embodiment. For example, the model generation apparatus 1 and the estimation apparatus 2 may be constituted by a single computer. Also, for example, at least one of the model generation apparatus 1 and the estimation apparatus 2 may also be constituted by a plurality of computers.

### 2. Configuration Example

### [Hardware Configuration]

### <Model Generation Apparatus>

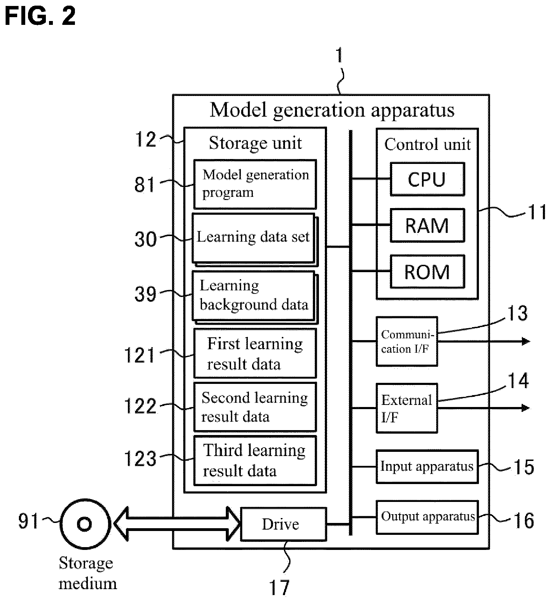

Fig. 2 schematically illustrates an example of a hardware configuration of the model generation apparatus 1 according to the present embodiment. As shown in Fig. 2, the model generation apparatus 1 according to the present embodiment is a computer in which a control unit 11, a storage unit 12, a communication interface 13, an external interface 14, an input apparatus 15, an output apparatus 16, and a drive 17 are electrically connected to each other. Note that in Fig. 2, the communication interface and the external interface are respectively denoted as "communication I/F" and "external I/F".

The control unit 11 includes a CPU (Central Processing Unit), which is a hardware processor, a RAM (Random Access Memory), a ROM (Read Only Memory), and the like, and is configured to execute information processing based on a program and various types of data. The storage unit 12 is an example of a memory, and is constituted by a hard disk drive, a solid-state drive, or the like. In the present embodiment, the storage unit 12 stores various types of information such as a model generation program 81, a plurality of learning data sets 30, a plurality of pieces of learning background data 39, and first to third pieces of learning result data 121 to 123.

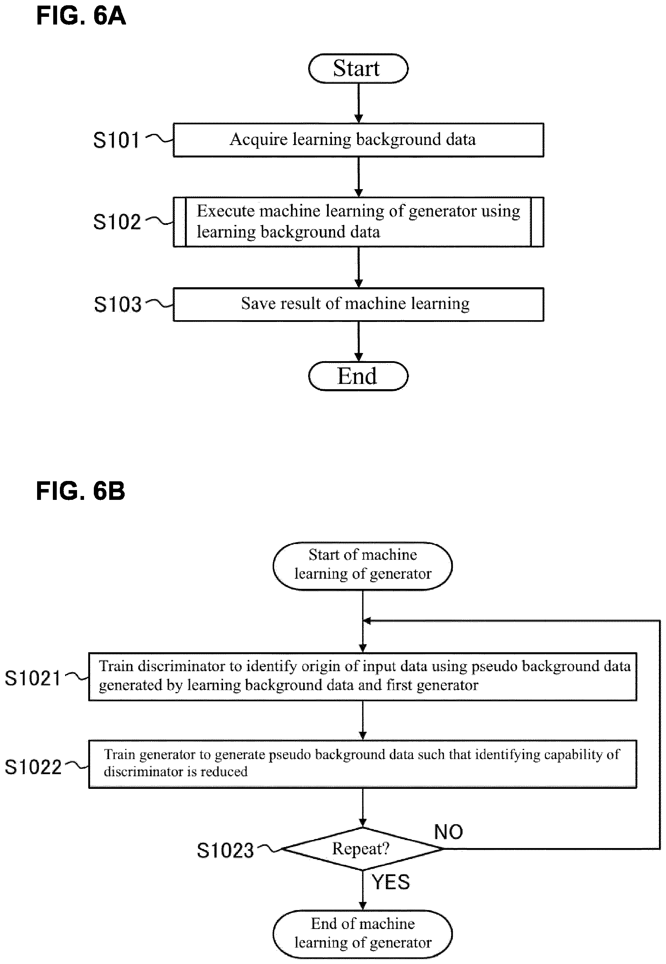

The model generation program 81 is a program for the model generation apparatus 1 to execute later-described information processing (Figs. 6A, 6B, 7, and 8) for generating learned models by performing machine learning. The model generation program 81 includes a series of commands for this information processing. The model generation program 81 may also be referred to simply as "generation program", "learning program", or the like. The learning data sets 30 are used for machine learning of the estimator 5. The learning background data 39 are used for machine learning of a later-described generator 60. The first to third pieces of learning result data 121 to 123 respectively indicate information relating to learned models constructed by machine learning. In the present embodiment, the first to third pieces of learning result data 121 to 123 are generated as a result of execution of the model generation program 81.

The communication interface 13 is a wired LAN (Local Area Network) module, a wireless LAN module, or the like, and is an interface for performing wired or wireless communication via a network. The model generation apparatus 1 may also perform data communication with another information processing apparatus via a network by using the communication interface 13. The external interface 14 is a USB (Universal Serial Bus) port, a dedicated port, or the like, and is an interface for connecting to an external apparatus. The type and the number of external interfaces 14 may be appropriately selected. The model generation apparatus 1 may also be connected to a camera for acquiring image samples such as the training data 31 and the learning background data 39, via at least one of the communication interface 13 and the external interface 14.

The input apparatus 15 is an apparatus for performing input, such as a mouse or a keyboard. Also, the output apparatus 16 is an apparatus for performing output, such as a display or a speaker. An operator such as a user can operate the model generation apparatus 1 by using the input apparatus 15 and the output apparatus 16.

The drive 17 is a CD drive, a DVD drive, or the like, and is a drive apparatus for reading various types of information such as programs stored in a storage medium 91. The storage medium 91 is a medium that stores various types of information such as programs via an electrical, magnetic, optical, mechanical, or chemical effect such that the stored information such as the programs can be read by an apparatus or a machine such as a computer. At least one of the model generation program 81, the plurality of learning data sets 30, and the plurality of pieces of learning background data 39 may be stored in the storage medium 91. The model generation apparatus 1 may acquire at least one of the model generation program 81, the plurality of learning data sets 30, and the plurality of pieces of learning background data 39 from the storage medium 91. Note that, in Fig. 2, a disk-type storage medium such as a CD or a DVD is illustrated as an example of the storage medium 91. However, the type of the storage medium 91 is not limited to the disk type, and the storage medium 91 may be a medium other than a disk-type medium. Storage media other than disk-type media include a semiconductor memory such as a flash memory, for example. The type of the drive 17 may be selected as appropriate depending on the type of the storage medium 91.

Note that constituent elements of the specific hardware configuration of the model generation apparatus 1 can be omitted, replaced, and added as appropriate depending on the embodiment. For example, the control unit 11 may also include a plurality of hardware processors. The hardware processors may also be constituted by a microprocessor, an FPGA (field-programmable gate array), a DSP (digital signal processor), and the like. The storage unit 12 may be constituted by the RAM and ROM included in the control unit 11. At least one of the communication interface 13, the external interface 14, the input apparatus 15, the output apparatus 16, and the drive 17 may be omitted. The model generation apparatus 1 may also be constituted by a plurality of computers. In this case, the hardware configuration of the computers may be the same, or may not be the same. Also, the model generation apparatus 1 may be a general-purpose server apparatus, a PC (Personal Computer), or the like, instead of an information processing apparatus that is specifically designed for the service to be provided.

### <Estimation Apparatus>

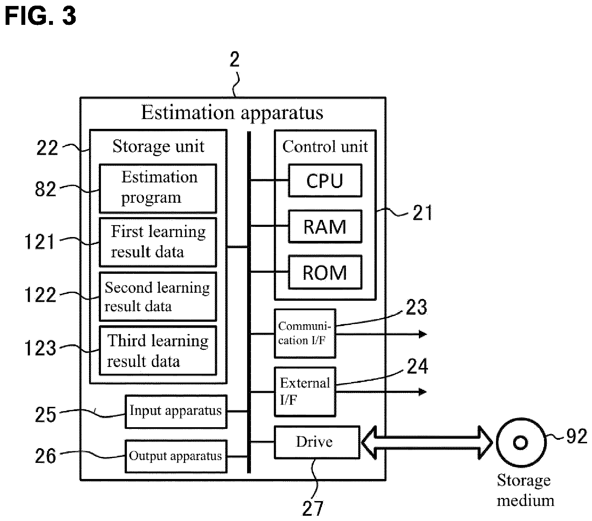

Fig. 3 schematically illustrates an example of a hardware configuration of the estimation apparatus 2 according to the present embodiment. As shown in Fig. 3, the estimation apparatus 2 according to the present embodiment is a computer in which a control unit 21, a storage unit 22, a communication interface 23, an external interface 24, an input apparatus 25, an output apparatus 26, and a drive 27 are electrically connected to each other.

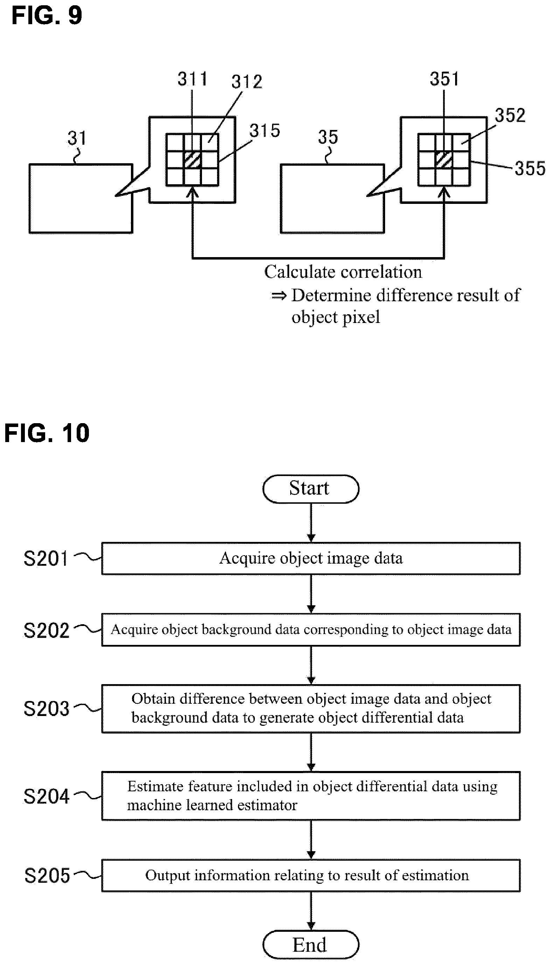

The control unit 21 to the drive 27 of the estimation apparatus 2 and a storage medium 92 may be configured similarly to the control unit 11 to the drive 17 of the model generation apparatus 1 and the storage medium 91. The control unit 21 includes a CPU, which is a hardware processor, a RAM, a ROM, and the like, and is configured to execute various types of information processing based on a program and data. The storage unit 22 is constituted by a hard disk drive, a solid-state drive, or the like. The storage unit 22 stores various types of information such as an estimation program 82, and the first to third pieces of learning result data 121 to 123. An estimation program 82 is a program for the estimation apparatus 2 to execute later-described information processing (Fig. 10) for executing an estimation task relating to a feature of an object on image data, using the trained estimator 5. The estimation program 82 includes a series of commands for this information processing. At least one of the estimation program 82, and the first to third pieces of learning result data 121 to 123 may be stored in the storage medium 92. Also, the estimation apparatus 2 may acquire at least one of the estimation program 82, and the first to third pieces of learning result data 121 to 123 from the storage medium 92.

Note that constituent elements of the specific hardware configuration of the estimation apparatus 2 can be omitted, replaced, and added as appropriate depending on the embodiment. For example, the control unit 21 may also include a plurality of hardware processors. The hardware processors may also be constituted by a microprocessor, an FPGA, a DSP, and the like. The storage unit 22 may be constituted by the RAM and the ROM included in the control unit 21. At least one of the communication interface 23, the external interface 24, the input apparatus 25, the output apparatus 26, and the drive 27 may be omitted. The estimation apparatus 2 may also be constituted by a plurality of computers. In this case, the hardware configuration of the computers may be the same, or may not be the same. Also, the estimation apparatus 2 may be a general-purpose server apparatus, a general-purpose PC, a PLC (programmable logic controller), or the like, instead of an information processing apparatus that is specifically designed for the service to be provided.

### [Software Configuration]

### <Model Generation Apparatus>

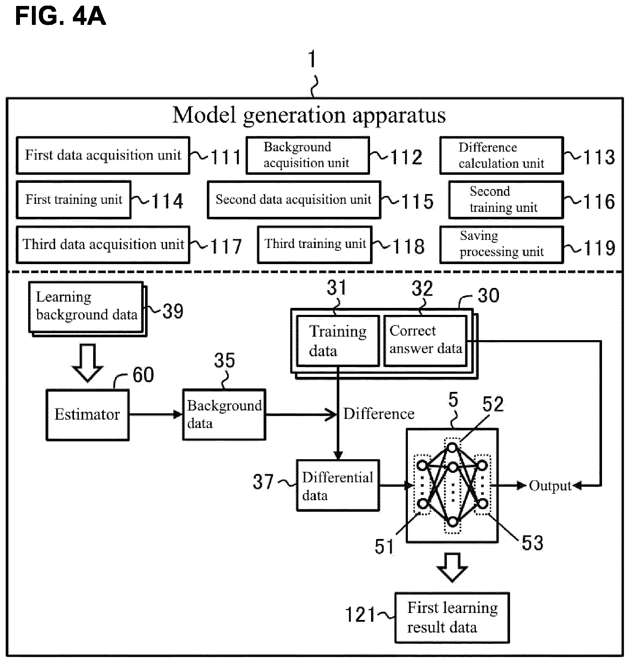

Figs. 4A to 4C schematically illustrate examples of a software configuration of the model generation apparatus 1 according to the present embodiment.

The control unit 11 of the model generation apparatus 1 deploys the model generation program 81 stored in the storage unit 12 in the RAM. Then, the control unit 11 controls each constituent element by the CPU interpreting and executing the commands included in the model generation program 81 deployed in the RAM. With this, as shown in Figs. 4A to 4C, the model generation apparatus 1 according to the present embodiment operates as a computer including a first data acquisition unit 111, a background acquisition unit 112, a difference calculation unit 113, a first training unit 114, a second data acquisition unit 115, a second training unit 116, a third data acquisition unit 117, a third training unit 118, and a saving processing unit 119, as software modules. That is to say, in the present embodiment, each software module of the model generation apparatus 1 is realized by the control unit 11 (CPU).

The first data acquisition unit 111 acquires the plurality of learning data sets 30 each constituted by a combination of training data 31, which is image data, and correct answer data 32 that indicates a feature included in the training data 31. Each of the learning data sets 30 is generated assuming a scenario of executing an estimation task relating to a feature of an object. The background acquisition unit 112 acquires background data 35 that indicates a background of the training data 31, with respect to each of the learning data sets 30. The background data 35 that corresponds to the training data 31 of each of the learning data sets 30 may be generated as appropriate. In the present embodiment, acquiring the background data 35 may also include generating background data 35 for the training data 31 with respect to each of the learning data sets 30, using the machine learned generator 60.

The difference calculation unit 113 obtains, with respect to each of the learning data sets 30, a difference between the acquired background data 35 and the training data 31 to generate differential data 37 that indicates the difference between the background data 35 and the training data 31. The first training unit 114 executes machine learning of the estimator 5 using the generated differential data 37. In the machine learning, the first training unit 114 trains the estimator 5 so that, with respect to each of the learning data sets 30, a result of estimating a feature by the estimator 5 based on the generated differential data 37 conforms to the correct answer data 32.

The second data acquisition unit 115 acquires a plurality of pieces of learning background data 39. The pieces of learning background data 39 are generated so that the same type of background as that of the training data 31 of the learning data sets 30 appears. The pieces of learning background data 39 are preferably generated so that only the background appears and no information relating to a feature of an object appears. The second training unit 116 executes machine learning using the acquired learning background data 39, and constructs a machine learned generator 60 trained to generate background data 35 corresponding to the training data 31. An appropriate machine learning model may be used as the generator 60, similarly to the estimator 5. The formats of inputs and outputs of the generator 60 may be determined as appropriate.

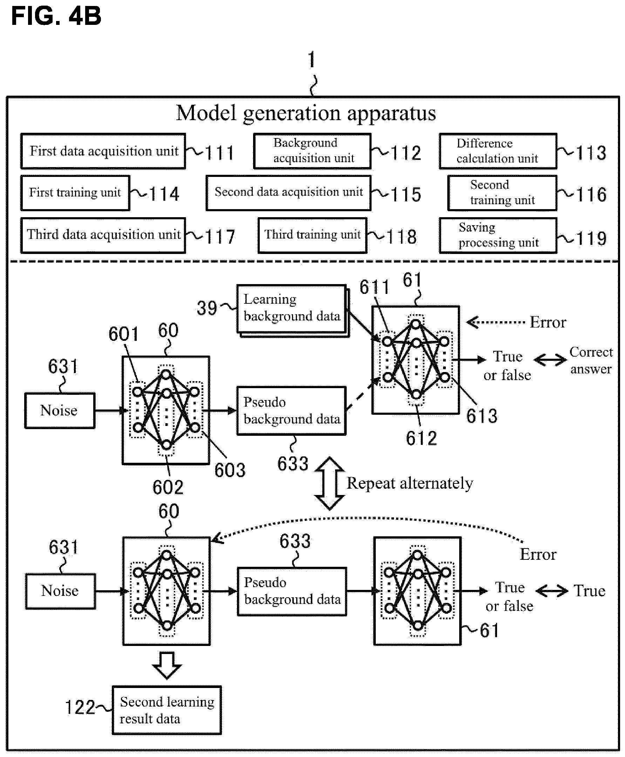

The configuration of the generator 60 and the method of machine learning may be appropriately selected as long as background data 35 corresponding to the training data 31 can be generated. As shown in Fig. 4B, in the present embodiment, a discriminator 61 is used to train the generator 60. The generator 60 is configured to accept an input of noise 631 (latent variable), generate pseudo background data 633 based on the input noise 631, and output an output value that corresponds to the generated pseudo background data 633. On the other hand, the discriminator 61 is configured to accept an input of background data (sample), identify the origin (source) of the input background data (sample), and output an output value that corresponds to the result of the discrimination. An appropriate machine learning model may be used as the discriminator 61, similarly to the generator 60 and the like. The formats of inputs and outputs of the discriminator 61 may be determined as appropriate.

Machine learning of the generator 60 according to the present embodiment includes a first training step for training the discriminator 61, and a second training step for training the generator 60. In the first training step, the second training unit 116 trains the discriminator 61 to enhance its capability of identifying whether or not input background data is learning background data 39 or pseudo background data 633 generated by the generator 60 (in other words, identifying the origin of the background data). On the other hand, in the second training step, the second training unit 116 trains the generator 60 to enhance its capability of generating the pseudo background data 633 such that it reduces the discrimination capability of the discriminator 61. The second training unit 116 executes the first training step and the second training step alternately and repeatedly. That is to say, the machine learning of the generator 60 according to the present embodiment is configured by adversarial learning between the generator 60 and the discriminator 61.

With the above-described machine learning, the trained generator 60 according to the present embodiment has acquired the capability of generating pseudo background data that conforms to the learning background data 39 from the noise of a latent variable. That is to say, with the trained generator 60 according to the present embodiment, it is possible to generate pseudo image data that has a high tendency to reproduce the background given by the learning background data 39, and has a low tendency to reproduce information other than the background. Accordingly, by using the trained generator 60, it is possible to generate background data 35 that corresponds to the training data 31, with respect to each of the learning data sets 30.

Note however that, as described above, in the present embodiment, the trained generator 60 is configured to generate pseudo background data based on noise. Therefore, if the machine learned generator 60 is used to generate background data 35 that corresponds to the training data 31, an appropriate input value (noise) to be given to the machine learned generator 60 will need to be determined. The model generation apparatus 1 according to the present embodiment further generates a machine learned input estimator 62 that can be used to determine the input value.

The input estimator 62 is configured to accept an input of image data, estimate the input value (noise) to be given to the machine learned generator 60 to generate (pseudo) background data that conforms to the background included in the input image data, and output an output value that corresponds to the obtained estimation value. An appropriate machine learning model may be used as the input estimator 62, similarly to the estimator 5 and the like. The formats of inputs and outputs of the input estimator 62 may be determined as appropriate.

The third data acquisition unit 117 acquires a plurality of learning data sets 64. Each of the learning data sets 64 is constituted by a combination of noise 641, which is a sample of an input value, and pseudo background data 643 generated by giving the noise 641 to the machine learned generator 60. The machine learned generator 60 may be used to generate each of the learning data sets 64.

The third training unit 118 executes machine learning of the input estimator 62 using the acquired plurality of learning data sets 64. In the machine learning, the third training unit 118 trains the input estimator 62 so that, with respect to each of the learning data sets 64, the estimation value obtained by estimating, using the input estimator 62, the input value given to the machine learned generator 60 based on the pseudo background data 643 conforms to the noise 641. With this, the input estimator 62 can acquire the capability of estimating an input value (noise) to be given to the machine learned generator 60 for the machine learned generator 60 to generate (pseudo) background data that conforms to the background included in the image data.

The saving processing unit 119 generates information relating to each of the trained estimator 5, the generator 60, and the input estimator 62 that were constructed by machine learning, as the first to third pieces of learning result data 121 to 123. Then, the saving processing unit 119 saves the generated first to third pieces of learning result data 121 to 123 in a predetermined storage area. The predetermined storage area may be selected as appropriate.

### [Configuration of Machine Learning Model]

An appropriate model that can execute machine learning may be used as the estimator 5, the generator 60, the discriminator 61, and/or the input estimator 62. As shown in Figs. 4A to 4C, in the present embodiment, each of the estimator 5, the generator 60, the discriminator 61, and the input estimator 62 is constituted by a multilayer fully connected neural network. Each of the estimator 5, the generator 60, the discriminator 61, and the input estimator 62 includes an input layer (51, 601, 611, 621), an intermediate (hidden) layer (52, 602, 612, 622), and an output layer (53, 603, 613, 623).

Note, however, that the structure of each of the estimator 5, the generator 60, the discriminator 61, and the input estimator 62 is not limited to this example, and may be selected as appropriate depending on the embodiment. For example, the number of intermediate layers (52, 602, 612, 622) is not limited to one, and may be two or more. Alternatively, the intermediate layer (52, 602, 612, 622) may be omitted. The number of layers constituting each neural network may be selected as appropriate. In at least one combination of the estimator 5, the generator 60, the discriminator 61, and the input estimator 62, the structures thereof may be at least partially the same, or may be different from each other.

Each layer (51 to 53, 601 to 603, 611 to 613, and 621 to 623) includes at least one neuron (node). The number of neurons (nodes) included in each of the layers (51 to 53, 601 to 603, 611 to 613, and 621 to 623) is not particularly limited, and may be selected as appropriate depending on the embodiment. Neurons in the adjacent layers are appropriately connected to each other. In the example shown in Figs. 4A to 4C, each neuron in one layer is connected to all neurons in the adjacent layer. However, the connections of neurons are not limited to this example, and may be set as appropriate depending on the embodiment.

A weight (connection load) is set for each connection. A threshold value is set for each neuron, and basically, the output of each neuron is determined based on whether or not the sum of products of respective inputs and respective weights exceeds the threshold value. The threshold values may be expressed as activating functions. In this case, the output of each neuron is determined by inputting the sum of products of respective inputs and respective weights to the activating function and executing a calculation of the activating function. The type of the activating function may be appropriately selected. The weights of connections between neurons included in the layers (51 to 53, 601 to 603, 611 to 613, and 621 to 623) and the threshold values of the neurons are examples of the computation parameters of the estimator 5, the generator 60, the discriminator 61, and the input estimator 62 that are to be used in computation processing. Values of the computation parameters of the estimator 5, the generator 60, the discriminator 61, and the input estimator 62 are adjusted so that an output suitable for desired inference can be obtained by the machine learning.

### [Machine Learning of Estimator]

As shown in Fig. 4A, the first training unit 114 inputs, with respect to each of the learning data sets 30, the generated differential data 37 to the input layer 51 of the estimator 5, and acquires an output value that corresponds to a result of estimating a feature of an object from the output layer 53. In the machine learning of the estimator 5, the first training unit 114 adjusts the values of the computation parameters of the estimator 5 so that an error between the acquired output value and the correct answer data 32 is small. Accordingly, with respect to each of the learning data sets 30, it is possible to generate a trained estimator 5 that has acquired the capability of estimating a feature of an object based on the differential data 37.

The saving processing unit 119 generates the first learning result data 121 for reproducing the trained estimator 5 generated by machine learning. The first learning result data 121 may be configured as appropriate as long as it is possible to reproduce the trained estimator 5. For example, the saving processing unit 119 generates information indicating the values of the computation parameters of the generated trained estimator 5 as the first learning result data 121. Depending on the case, the first learning result data 121 may further include information that indicates the structure of the trained estimator 5. The structure may be specified by, for example, the number of layers from the input layer to the output layer in the neural network, the types of the layers, the number of neurons included in each layer, the connection relationship of neurons of adjacent layers, or the like. The saving processing unit 119 saves the generated first learning result data 121 in a predetermined storage area.

### [Machine Learning of Generator]

As shown in Fig. 4B, machine learning of the generator 60 according to the present embodiment includes the first training step and the second training step. In the first training step, the second training unit 116 inputs the noise 631 to the input layer 601 of the generator 60, and obtains, from the output layer 603, an output value that corresponds to pseudo background data 633 generated from the noise 631. The second training unit 116 inputs the generated pseudo background data 633 to the input layer 611 of the discriminator 61, and obtains an output value that corresponds to a result of identifying the origin of the input background data from the output layer 613. Also, the second training unit 116 inputs the learning background data 39 to the input layer 611 of the discriminator 61, and obtains an output value that corresponds to a result of identifying the origin of the input background data from the output layer 613.

In the example of Fig. 4B, "true" represents the scenario where the input background data is derived from the learning data, and "false" represents the scenario where the input background data is derived from the generator 60. "True" may be replaced by "1", and "false" may be replaced by "0". Note, however, that the methods for expressing the origins are not limited to this example, and may be selected as appropriate depending on the embodiment. Of the two scenarios where a result of identifying the origin of the background data is obtained, in one scenario in which the generated pseudo background data 633 is input to the discriminator 61, the correct answer is that the discriminator 61 discriminates the scenario as "true". On the other hand, in the scenario in which the learning background data 39 is input to the discriminator 61, the correct answer is that the discriminator 61 discriminates the scenario as "false". In the first training step, the second training unit 116 fixes the values of the computation parameters of the generator 60, and adjusts the values of the computation parameters of the discriminator 61 so that, in each of the scenarios, the error between the output value obtained from the output layer 613 and the correct answer is small. With this, it is possible to train the discriminator 61 to enhance its capability of identifying the origin of input background data.

On the other hand, in the second training step, the second training unit 116 inputs the noise 631 to the input layer 601 of the generator 60, and obtains, from the output layer 603, an output value that corresponds to the pseudo background data 633 generated from the noise 631. The same processing for generating the pseudo background data 633 may be executed in both the first training step and the second training step. That is to say, the pseudo background data 633 generated in the first training step may be used also in the second training step. The second training unit 116 inputs the generated pseudo background data 633 to the input layer 611 of the discriminator 61, and obtains an output value that corresponds to a result of identifying the origin of the input background data from the output layer 613.

In the second training step, the correct answer is that the discrimination capability of the discriminator 61 is lowered (that is, the discrimination result is false). That is to say, the correct answer is that the output value obtained from the output layer 613 corresponds to "true". The second training unit 116 fixes the values of the computation parameters of the discriminator 61, and adjusts the values of the computation parameters of the generator 60 so that the error between the output value obtained from the output layer 613 and the correct answer is small. With this, it is possible to train the generator 60 to enhance its capability of generating the pseudo background data 633 such that the discrimination capability of the discriminator 61 is reduced.

By executing the first training step and the second training step alternately and repeatedly, the second training unit 116 can alternately enhance the capabilities of the discriminator 61 and the generator 60. With this, it is possible to enhance the capability of the generator 60 that generates pseudo background data 633 that conforms to the learning background data 39, in response to the enhancement in the discrimination capability of the discriminator 61. Therefore, by the machine learning, it is possible to construct a trained generator 60 that can generate, from noise, pseudo background data that has a high tendency to reproduce a background that may appear in image data obtained in a scenario in which an estimation task is executed, and has a low tendency to reproduce information other than the background. Note that the first training step and the second training step may be performed in an appropriate order.

The saving processing unit 119 generates the second learning result data 122 for reproducing the trained generator 60 generated by machine learning. The configuration of the second learning result data 122 may be the same as that of the first learning result data 121. For example, the second learning result data 122 may include information that indicates values of the computation parameters of the trained generator 60. Depending on the case, the second learning result data 122 may further include information that indicates the structure of the trained generator 60. The saving processing unit 119 saves the generated second learning result data 122 in a predetermined storage area. Note that the trained discriminator 61 may be dealt with as appropriate. The second learning result data 122 may further include or may not include information for reproducing the trained estimator 61.

### [Machine Learning of Input Estimator]

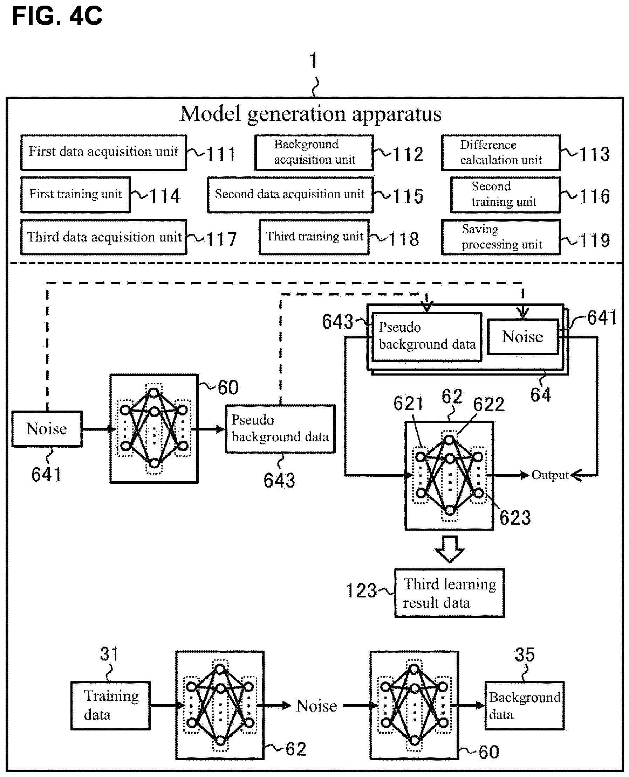

As shown in Fig. 4C, the third training unit 118 inputs, with respect to each of the learning data sets 64, the pseudo background data 643 to the input layer 621 of the input estimator 62, and obtains an output value from the output layer 623. The output value obtained from the input estimator 62 corresponds to a result of estimating the input value (noise) to be given to the machine learned generator 60 in order for the machine learned generator 60 to generate the input pseudo background data 643. The third training unit 118 adjusts the values of the computation parameters of the input estimator 62 so that the error between the acquired output value and the corresponding noise 641 is small. With this, it is possible to generate a trained input estimator 62 that has acquired the capability of estimating the input value (noise) to be given to the machine learned generator 60, in order for the machine learned generator 60 to generate (pseudo) background data that conforms to the background included in the image data.

The saving processing unit 119 generates the third learning result data 123 for reproducing the trained input estimator 62 generated by machine learning. The configuration of the third learning result data 123 may be the same as that of the first learning result data 121, or the like. For example, the third learning result data 123 may include information that indicates values of the computation parameters of the trained input estimator 62. Depending on the case, the third learning result data 123 may further include information that indicates the structure of the trained input estimator 62. The saving processing unit 119 saves the generated third learning result data 123 in a predetermined storage area.

### [Generation of Background Data]

As shown in Fig. 4C, in the present embodiment, the background acquisition unit 112 can generate background data 35 that corresponds to the training data 31 of each of the learning data sets 30, using the trained generator 60 and input estimator 62 generated by the machine learning.

Specifically, the background acquisition unit 112 inputs, with respect to each of the learning data sets 30, the training data 31 to the input layer 621 of the machine learned input estimator 62, and acquires an output value from the output layer 623. The output value obtained from the machine learned input estimator 62 corresponds to an estimation value of noise to be given to the machine learned generator 60 to generate pseudo background data that conforms to the background included in the training data 31.

Then, the background acquisition unit 112 inputs the acquired estimation value of the noise to the input layer 601 of the machine learned generator 60, and acquires, from the output layer 603, an output value that corresponds to the pseudo background data generated from the estimation value of the noise. The background acquisition unit 112 can acquire the generated pseudo background data as the background data 35 for the training data 31.

### [Estimation Apparatus]

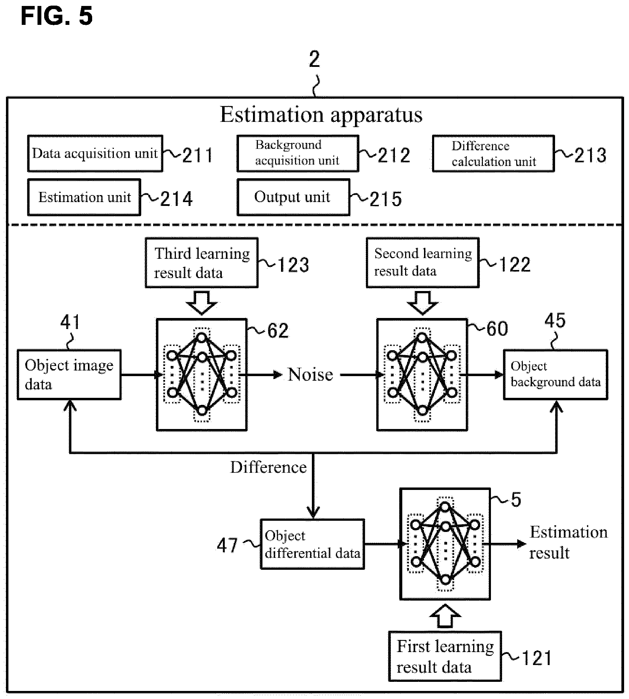

Fig. 5 schematically illustrates an example of a software configuration of the estimation apparatus 2 according to the present embodiment.

The control unit 21 of the estimation apparatus 2 deploys the estimation program 82 stored in the storage unit 22 in the RAM. Then, the control unit 21 controls each constituent element by the CPU interpreting and executing the commands included in the estimation program 82 deployed in the RAM. With this, as shown in Fig. 5, the estimation apparatus 2 according to the present embodiment operates as a computer including a data acquisition unit 211, a background acquisition unit 212, a difference calculation unit 213, an estimation unit 214, and an output unit 215, as software modules. That is to say, in the present embodiment, each software module of the estimation apparatus 2 is realized by the control unit 21 (CPU), as in the model generation apparatus 1.

The data acquisition unit 211 acquires object image data 41 to be subjected to an estimation task. The background acquisition unit 212 acquires object background data 45 that corresponds to the object image data 41. In the present embodiment, the background acquisition unit 212 includes the machine learned generator 60 and input estimator 62, by storing the second learning result data 122 and the third learning result data 123. The background acquisition unit 212 may estimate noise to be given to the machine learned generator 60 to generate pseudo background data that conforms to the background included in the object image data 41, by giving the object image data 41 to the machine learned input estimator 62. Then, the background acquisition unit 212 may also generate pseudo background data, by giving the acquired estimation value of the noise to the machine learned generator 60. The background acquisition unit 212 may also acquire the generated pseudo background data as the object background data 45.

The difference calculation unit 213 obtains a difference between the object image data 41 and the object background data 45 to generate object differential data 47. The estimation unit 214 includes the machine learned estimator 5 by storing the first learning result data 121. The estimation unit 214 estimates a feature included in the generated object differential data 47, using the machine learned estimator 5. The output unit 215 outputs information relating to a result of estimating a feature.

### <Other Considerations>

The software modules of the model generation apparatus 1 and the estimation apparatus 2 will be described in detail in a later-described exemplary operation example. Note that, in the present embodiment, an example is described in which the software modules of the model generation apparatus 1 and the estimation apparatus 2 are realized by a general-purpose CPU. However, some or all of the software modules described above may be realized by at least one dedicated processor. Also, regarding the software configurations of the model generation apparatus 1 and the estimation apparatus 2, software modules may also be omitted, replaced, and added as appropriate depending on the embodiment.

### 3. Operation Example

### [Model Generation Apparatus]

### (A) Machine Learning of Generator

Fig. 6A is a flowchart illustrating an example of a processing procedure relating to machine learning of the generator 60 by the model generation apparatus 1 according to the present embodiment. Note that the processing procedures to be described below are merely examples, and each step may be changed to the extent possible. Moreover, in the processing procedure to be described below, steps may also be omitted, replaced, or added as appropriate depending on the embodiment.

### [Step S101]

In step S101, the control unit 11 operates as the second data acquisition unit 115, and acquires a plurality of pieces of learning background data 39.

The learning background data 39 may be generated as appropriate. For example, by assuming a scenario of executing an estimation task and shooting, with a camera, backgrounds under various conditions in a real space or a virtual space, it is possible to generate the learning background data 39. At this time, it is preferable that the learning background data 39 be generated so that only the background appears and no information relating to features of objects appear. The background may be selected as appropriate according to the estimation task. Preferably, learning background data 39 is extensively collected, with respect to the different types of backgrounds such as backgrounds having different undergrounds. On the other hand, with respect to dispersion such as in cases where the background is the same but shooting positions are shifted, learning background data 39 may not be collected extensively. The type of the background to be shot is the same as that of the training data 31. If the training data 31 including features of objects and a background has been obtained, the learning background data 39 may be generated by appropriately removing the information relating to the features of the objects from the training data 31 through image processing. Alternatively, the learning background data 39 may be acquired separately from the training data 31.

The learning background data 39 may be generated automatically by operation of a computer, or may be generated manually such that an operation of an operator is included at least partially. Also, the generation of the learning background data 39 may be performed by the model generation apparatus 1 or a computer other than the model generation apparatus 1. When the learning background data 39 is generated by the model generation apparatus 1, the control unit 11 automatically executes the above-described generation processing or executes it manually by an operation of an operator via the input apparatus 15, and acquires the learning background data 39. On the other hand, when the learning background data 39 is generated by another computer, the control unit 11 acquires the learning background data 39 generated by the other computer via, for example, a network, the storage medium 91, or the like. A portion of the learning background data 39 may be generated by the model generation apparatus 1, and the remaining portion of the learning background data 39 may be generated by one or more other computers.

The number of pieces of learning background data 39 to be acquired may be selected as appropriate. Upon acquisition of a plurality of pieces of learning background data 39, the control unit 11 moves the processing to the next step S102.

### [Step S102]

In step S102, the control unit 11 operates as the second training unit 116, and executes machine learning of the generator 60 using the acquired plurality of pieces of learning background data 39. With this, a machine learned generator 60 is constructed that has been trained to generate the background data 35 for the training data 31.

Fig. 6B is a flowchart illustrating an example of a processing procedure of a sub routine relating to the machine learning of the generator 60 according to the present embodiment. The processing of step S102 according to the present embodiment includes the following steps S1021 to S1023. Note, however, that the processing procedures to be described below are merely examples, and each piece of processing may be changed to the extent possible. Also, with respect to the processing procedure to be described below, steps may also be omitted, replaced, or added as appropriate depending on the embodiment.

In the present embodiment, the discriminator 61 is used to train the generator 60. Appropriate neural networks may be prepared that respectively constitute the generator 60 and the discriminator 61 to be processed. The structure (such as the number of layers, the number of neurons included in each layer, and connection relationship between neurons of adjacent layers) of the generator 60 and the discriminator 61, default values of weights of connections between neurons, and default values of threshold values of neurons may be given by a template, or may be given by input of an operator. Also, when relearning is performed, the control unit 11 may prepare the generator 60 and the discriminator 61 based on learning result data obtained by past machine learning.

### [Step S1021]

In step S1021, the control unit 11 trains the discriminator 61 to identify the origin of input background data, using the learning background data 39 and the pseudo background data 633 generated by the generator 60. Step S1021 is an example of the above-described first training step. A stochastic gradient descent method, a mini batch gradient descent method, or the like may be used for the training processing of the machine learning. The same will apply to processing of machine learning of another neural network such as later-described step S1022 or the like.

As an example, first, the control unit 11 extracts the noise 631 (latent variable) from a predetermined probability distribution. The predetermined probability distribution may be selected as appropriate. The predetermined probability distribution may be a well-known probability distribution such as a Gaussian distribution, for example. Then, the control unit 11 gives the extracted noise 631 to the generator 60, and executes computation processing of the generator 60. That is to say, the control unit 11 inputs the noise 631 to the input layer 601 of the generator 60, and performs determination of firing of neurons included in each of the layers 601 to 603 in this order from the input side (that is to say, performs computation of forward propagation). With this computation processing, the control unit 11 obtains, from the output layer 603, an output value that corresponds to the pseudo background data 633 generated from the noise 631. The number of pieces of pseudo background data 633 to be generated may be any number. Note that the computation processing of forward propagation is also executed in computation processing of other neural networks below.

Then, the control unit 11 inputs the generated pseudo background data 633 to the input layer 611 of the discriminator 61, and executes computation processing of the discriminator 61. With this, the control unit 11 obtains an output value that corresponds to a result of identifying the origin of the input background data from the output layer 613 of the discriminator 61. In this scenario, since the input background data is the pseudo background data 633, the correct answer is that the discriminator 61 identifies the input background data as "false". The control unit 11 calculates, with respect to the pseudo background data 633 of each case, an error between the output value obtained from the output layer 613 and this correct answer.

Also, the control unit 11 inputs each of the pieces of learning background data 39 to the input layer 611 of the discriminator 61, and executes computation processing of the discriminator 61. With this, the control unit 11 obtains an output value that corresponds to a result of identifying the origin of the input background data from the output layer 613 of the discriminator 61. In this scenario, since the input background data is the learning background data 39, the correct answer is that the discriminator 61 identifies the input background data as "true". The control unit 11 calculates, with respect to each of the pieces of learning background data 39, an error between the output value obtained from the output layer 613 and this correct answer.

A loss function may be used to calculate an error (loss). A loss function is a function that evaluates a difference (that is, a degree of difference) between an output of a machine learning model and a correct answer, and the larger the difference value between the output value obtained from the output layer 613 and this correct answer is, the larger the value of the error calculated using the loss function. The type of loss function that is used for error calculation is not particularly limited, and may be selected as appropriate depending on the embodiment.

The control unit 11 uses the gradient of the calculated error of the output value with the back propagation method, and calculates errors of values of computation parameters (such as the weights of connections of neurons, and threshold values of neurons) of the discriminator 61. The control unit 11 updates the values of the computation parameters of the discriminator 61 based on the calculated errors. The degree of update of the values of the computation parameters may be adjusted based on a learning rate. The learning rate may be given by designation of an operator or may be given as a set value in a program.

The control unit 11 fixes the values of the computation parameters of the generator 60, and adjusts, by the above-described series of update processing, the values of the computation parameters of the discriminator 61 so that the sum of the calculated errors is small. For example, the control unit 11 may repeatedly adjust the values of the computation parameters of the discriminator 61 using the above-described series of processing, until a predetermined condition is satisfied such as execution being made a predetermined number of times, or the sum of the calculated errors being reduced to a threshold value or less. With this, the control unit 11 can train the discriminator 61 to enhance its capability of identifying the origin of input background data. Upon completion of the training processing of the discriminator 61, the control unit 11 moves the processing to the next step S1022.

### [Step S1022]

In step S1022, the control unit 11 trains the generator 60 to generate the pseudo background data 633 such that the identifying capability of the discriminator 61 is reduced. In other words, the control unit 11 trains the generator 60 to generate the pseudo background data 633 such that the discriminator 61 identifies the input background data as "true" (that is, the discriminator 61 identifies the input background data as being derived from learning background data). Step S1022 is an example of the above-described second training step.

As an example, the control unit 11 first generates the pseudo background data 633 by giving the noise 631 extracted from a predetermined probability distribution to the generator 60, as in step S 1021. If the pseudo background data 633 generated in step S1021 is used also in step S1022, the control unit 11 may omit processing for generating the pseudo background data 633 in step S1022.

Then, the control unit 11 inputs the generated pseudo background data 633 to the input layer 611 of the discriminator 61, and executes computation processing of the discriminator 61. With this, the control unit 11 obtains an output value that corresponds to a result of identifying the origin of the input background data from the output layer 613 of the discriminator 61. In this scenario, the correct answer is that the discriminator 61 wrongly identifies the input background data as "true" (that is, as being derived from learning background data). The control unit 11 calculates, with respect to the pseudo background data 633 for each case, an error between the output value obtained from the output layer 613 and this correct answer. As described above, an appropriate loss function may be used to calculate the error.

The control unit 11 uses the back propagation method to propagate the gradient of the calculated error of the output value to computation parameters of the generator 60 via the discriminator 61, and calculates errors of the values of the computation parameters of the generator 60. The control unit 11 updates the values of the computation parameters of the generator 60 based on the calculated errors. As described above, the degree of update of the values of the computation parameters may be adjusted based on a learning rate.

The control unit 11 fixes the values of the computation parameters of the discriminator 61, and adjusts, by the above-described series of update processing, the values of the computation parameters of the generator 60 so that the sum of the calculated errors is small. Similarly to the training of the discriminator 61, the control unit 11 may repeatedly adjust the values of the computation parameters of the generator 60 using the above-described series of processing, until a predetermined condition is satisfied. With this, the control unit 11 can train the generator 60 to enhance its capability of generating the pseudo background data 633 such that the discrimination capability of the discriminator 61 is reduced. Upon completion of the training processing of the generator 60, the control unit 11 moves the processing to the next step S1023.

### [Step S1023]

In step S 1023, the control unit 11 determines whether or not to repeat the processing of steps S1021 and S1022. The standard for the repetition of the processing may be determined as appropriate. For example, a predetermined number of times the processing is repeated may be set as appropriate. The predetermined number of times may be given by designation of an operator or may be given as a set value in a program, for example. In this case, the control unit 11 determines whether or not the number of times the processing of steps S1021 and S 1022 has been executed has reached the predetermined number of times. If it is determined that the number of times of the execution has not reached the predetermined number of times, the control unit 11 returns to the processing in step S1021, and executes again the processing in steps S1021 and S1022. On the other hand, if it is determined that the number of times of the execution has reached the predetermined number of times, the control unit 11 completes the processing of machine learning of the generator 60, and moves the processing to the next step S103.

With this, the control unit 11 executes the step of training the discriminator 61 and the step of training the generator 60 alternately and repeatedly. Accordingly, it is possible to alternately enhance the capabilities of the discriminator 61 and the generator 60. As a result, it is possible to construct the trained generator 60 that has acquired the capability of generating pseudo background data 633 that conforms to the learning background data 39 (thus, capability of generating the background data 35 for the training data 31).

### [Step S103]

Returning to Fig. 6A, in step S103, the control unit 11 operates as the saving processing unit 119, and generates information relating to the trained generator 60 constructed by machine learning, as the second learning result data 122. Then, the control unit 11 saves the generated second learning result data 122 in a predetermined storage area.

A predetermined storage area may be, for example, the RAM of the control unit 11, the storage unit 12, an external storage device, a storage medium, or a combination thereof. The storage medium may be, for example, a CD, DVD, or the like, and the control unit 11 may store the second learning result data 122 in the storage medium via the drive 17. The external storage device may be a data server such as a NAS (Network Attached Storage), for example. In this case, the control unit 11 may use the communication interface 13 to store the second learning result data 122 in the data server via a network. Also, the external storage device may be an externally-attached storage device connected to the model generation apparatus 1 via the external interface 14, for example.

With this, after having completely saved the second learning result data 122, the control unit 11 ends the series of processing relating to the machine learning of the generator 60.

Note that the generated second learning result data 122 may be provided to the estimation apparatus 2 at an appropriate timing. For example, the control unit 11 may transfer the second learning result data 122 to the estimation apparatus 2 as the processing in step S103 or separately from the processing in step S103. Upon receiving the transfer, the estimation apparatus 2 may acquire the second learning result data 122. Also, for example, the estimation apparatus 2 may use the communication interface 23 to access the model generation apparatus 1 or the data server via a network, and acquire the second learning result data 122. Also, for example, the estimation apparatus 2 may acquire the second learning result data 122 via the storage medium 92. Also, for example, the second learning result data 122 may be incorporated in advance into the estimation apparatus 2.

Furthermore, the control unit 11 may update or newly generate the second learning result data 122, by regularly or irregularly repeating the processing in steps S101 to S103. During the repetition, at least a portion of the learning background data 39 may be, for example, changed, modified, added, or deleted as appropriate. Then, the control unit 11 may provide the updated or newly generated second learning result data 122 to the estimation apparatus 2 by an appropriate method, and update the second learning result data 122 held by the estimation apparatus 2.

### (B) Machine Learning of Input Estimator

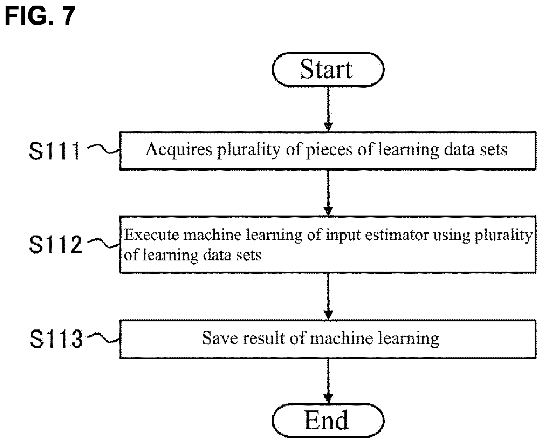

Fig. 7 is a flowchart illustrating an example of a processing procedure relating to machine learning of the input estimator 62 by the model generation apparatus 1 according to the present embodiment. The processing procedures to be described below are merely examples, and each step may be changed to the extent possible. Moreover, in the processing procedure to be described below, steps may also be omitted, replaced, or added as appropriate depending on the embodiment.

### [Step S111Ì

In step S111, the control unit 11 operates as the third data acquisition unit 117, and acquires a plurality of learning data sets 64. Each of the learning data sets 64 is constituted by a combination of noise 641, which is a sample of an input value, and pseudo background data 643 generated by giving the noise 641 to the machine learned generator 60.

The learning data sets 64 may be generated as appropriate by using the machine learned generator 60. As an example, the noise 641 (latent variable) is extracted from a predetermined probability distribution (such as, e.g., a Gaussian distribution). The extracted noise 641 is input to the input layer 601 of the machine learned generator 60, and computation processing of the machine learned generator 60 is executed. With this computation processing, it is possible to obtain an output value that corresponds to the pseudo background data 643 generated based on the noise 641, from the output layer 603 of the trained generator 60. The input noise 641 is associated with the generated pseudo background data 643. With this, it is possible to generate the learning data sets 64. Note that the configuration of the learning data sets 64 is not limited to this example. For example, the learning data sets 64 may include, instead of the pseudo background data 643, image data that further include information (for example, a feature of an object) other than the background. In this case, the same noise 641 is associated with image data of the same background.

Similar to the learning background data 39, the learning data sets 64 may be generated automatically by operation of a computer, or may be generated manually such that an operation of an operator is at least partially included. Also, the generation of the learning data sets 64 may be performed by the model generation apparatus 1 or a computer other than the model generation apparatus 1. Some of the learning data sets 64 may be generated by the model generation apparatus 1, and the remaining learning data sets 64 may be generated by one or more other computers.

The number of learning data sets 64 to be acquired may be selected as appropriate. Upon acquisition of a plurality of learning data sets 64, the control unit 11 moves the processing to the next step S 112.

### [Step S 112]

In step S112, the control unit 11 operates as the third training unit 118, and executes machine learning of the input estimator 62 using the acquired plurality of learning data sets 64. In the machine learning, the control unit 11 trains the input estimator 62 so that, with respect to each of the learning data sets 64, the estimation value obtained by the input estimator 62 estimating the input value given to the machine learned generator 60 based on the pseudo background data 643 conforms to the noise 641.

As an example, first, the control unit 11 inputs, with respect to each of the learning data sets 64, the pseudo background data 643 to the input layer 621 of the input estimator 62, and executes computation processing of the input estimator 62. With this, the control unit 11 obtains an output value that corresponds to a result of estimating the input value (noise) to be given to the machine learned generator 60 from the output layer 623, in order to generate the pseudo background data 643. The control unit 11 calculates an error between the obtained estimation value and the corresponding noise 641. Similarly to step S1021 and the like, an appropriate loss function may be used to calculate the error.

The control unit 11 uses the gradient of the calculated error with the back propagation method, and calculates errors of values of computation parameters of the input estimator 62. The control unit 11 updates values of the computation parameters of the input estimator 62 based on the calculated errors. Similarly to step S1021 and the like, the degree of update of the values of the computation parameters may be adjusted based on a learning rate.

The control unit 11 adjusts, by the above-described series of update processing, the values of the computation parameters of the input estimator 62 so that the sum of the calculated errors is small. Similarly to step S1021 and the like, the control unit 11 may repeatedly adjust the values of the computation parameters of the input estimator 62 using the above-described series of processing, until a predetermined condition is satisfied.

With this machine learning, the input estimator 62 is trained to be able to appropriately estimate, with respect to each of the learning data sets 64, the noise 641 based on the pseudo background data 643. That is, the input estimator 62 is trained to estimate the input based on the output of the machine learned generator 60. The machine learned generator 60 is trained to generate pseudo image data that has a high tendency to reproduce the background, and has a low tendency to reproduce information other than the background. Therefore, if image data has the same background, the input estimator 62 is trained to be able to estimate the same input value (noise) even if the image data includes another type of information. As long as the same noise 641 is associated with the image data having the same background, the input estimator 62 can be trained in the same manner even if the pseudo background data 643 is replaced by image data that additionally includes another type of information. Therefore, it is possible to construct, by the machine learning, the trained input estimator 62 that has acquired the capability of estimating an input value (noise) to be given to the machine learned generator 60, in order to generate pseudo background data including this background, based on the background appearing in the given image data. Upon completion of the machine learning of the input estimator 62, the control unit 11 moves the processing to the next step S113.

### [Step S113]

In step S113, the control unit 11 operates as the saving processing unit 119, and generates information relating to the trained input estimator 62 constructed by machine learning, as the third learning result data 123. Then, the control unit 11 saves the generated third learning result data 123 in a predetermined storage area. A predetermined storage area may be, for example, the RAM of the control unit 11, the storage unit 12, an external storage device, a storage medium, or a combination thereof.

With this, after having completely saved the third learning result data 123, the control unit 11 ends the series of processing relating to machine learning of the input estimator 62. Note that, similar to the second learning result data 122, the generated second learning result data 123 may be provided to the estimation apparatus 2 at an appropriate timing. Also, the processing in steps S111 to S113 may be repeated regularly or irregularly. Then, when the updated or newly generated third learning result data 123 is provided to the estimation apparatus 2 by an appropriate method, the third learning result data 123 held by the estimation apparatus 2 may be updated.

### (C) Machine Learning of Estimator

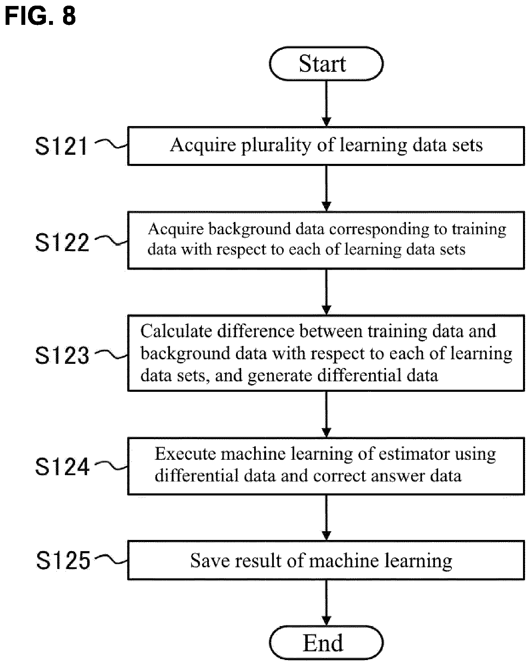

Fig. 8 is a flowchart illustrating an example of a processing procedure relating to the machine learning of the estimator 5 by the model generation apparatus 1 according to the present embodiment. The processing procedure to be described below is an example of the "model generation method" of the present invention. Note, however, that the processing procedures to be described below are merely examples, and each step may be changed to the extent possible. Moreover, in the processing procedure to be described below, steps may also be omitted, replaced, or added as appropriate depending on the embodiment.

### [Step S121]

In step S121, the control unit 11 operates as the first data acquisition unit 111, and acquires a plurality of learning data sets 30. Each of the learning data sets 30 is constituted by a combination of training data 31, which is image data, and correct answer data 32 that indicates a feature included in the training data 31.

Each of the learning data sets 30 may be generated as appropriate. The training data 31 may be obtained by, for example, performing shooting using a camera in a state in which a feature of an object, with a background, appears in a real space or a virtual space. As a specific example, when a trained estimator is generated that can be used for visual inspection of products, it is possible to obtain training data by shooting products with or without defect using a camera. Then, information indicating a result (correct answer) of estimating a feature of an object included in the obtained training data 31, the information serving as correct answer data 32, is associated with the obtained training data 31. The method for estimating a feature of an object may be appropriately selected. For example, the estimation of a feature may be executed by an operator. With this, it is possible to generate the learning data sets 30.

Similar to the learning background data 39 and the like, the learning data sets 30 may be generated automatically by operation of a computer, or may be generated manually such that an operation of an operator is at least partially included. Also, the generation of the learning data sets 30 may be performed by the model generation apparatus 1 or a computer other than the model generation apparatus 1. Some of the learning data sets 30 may be generated by the model generation apparatus 1, and the remaining learning data sets 30 may be generated by one or more other computers.

The number of learning data sets 30 to be acquired may be selected as appropriate. Upon acquisition of the plurality of learning data sets 30, the control unit 11 moves the processing to next step S122.

### [Step S122]

In step S122, the control unit 11 operates as the background acquisition unit 112, and acquires the background data 35 that corresponds to the training data 31, with respect to each of the learning data sets 30.

The background data 35 may be generated as appropriate. In the present embodiment, the control unit 11 can generate background data 35 that corresponds to the training data 31, with respect to each of the learning data sets 30, using the machine learned generator 60 and input estimator 62. Specifically, the control unit 11 inputs, with respect to each of learning data sets 30, the training data 31 to the input layer 621 of the machine learned input estimator 62, and executes computation processing of the input estimator 62. With this, the control unit 11 can obtain an output value that corresponds to a result of estimating the input value to be given to the machine learned generator 60 from the output layer 623 of the machine learned input estimator 62, in order to generate the pseudo background data that conforms to the background included in the input training data 31. Then, the control unit 11 inputs the estimation value obtained by the machine learned input estimator 62 to the input layer 601 of the machine learned generator 60, and executes computation processing of the machine learned generator 60. With this, the control unit 11 can obtain an output value that corresponds to the pseudo background data generated based on the estimation value, from the output layer 603 of the machine learned generator 60. The control unit 11 may also acquire the pseudo background data generated with respect to each of the learning data sets 30, as the background data 35 for the training data 31. Upon acquisition of the background data 35, the control unit 11 moves the processing to the next step S123.

### [Step S123]

In step S123, the control unit 11 operates as the difference calculation unit 113, and calculates, with respect to each of the learning data sets 30, a difference between the acquired background data 35 and the training data 31 to generate differential data 37. Upon generation of the differential data 37, the control unit 11 moves the processing to the next step S124.

Note that the difference calculation method is not particularly limited, and may be determined as appropriate depending on the embodiment, as long as information relating to the background included in the training data 31 can be reduced based on the background data 35. As an example, the control unit 11 may compare values of pixels at the same position between the training data 31 and the background data 35, and generate the differential data 37 by regarding "0" if the values of pixels are the same, and adopting the pixel value of the training data 31 as is, if the values of pixels are different.

As another example, the control unit 11 may simply calculates a difference between values of pixels at the same position between the training data 31 and the background data 35. In this simple difference calculation, there is a possibility that a slight difference in background between the background data 35 and the training data 31 remains in the differential data 37. Specifically, this possibility is high when the background data 35 is generated by the machine learned generator 60. Here, to address this, the control unit 11 may also binarize the acquired differential data 37. For example, when the pixel values of the differential data 37 are expressed between 0 and 255, the control unit 11 may compare a difference calculated between pixel values of the training data 31 and the background data 35 with a threshold value. The threshold value may be determined as appropriate. Then, the control unit 11 may generate the differential data 37 by regarding the pixel value whose difference is less than the threshold value as "0", and the pixel value whose difference is greater than the threshold value as "255".

Fig. 9 schematically illustrates an example of another method for calculating a difference between the training data 31 and the background data 35. In this method, the control unit 11 calculates the correlation between an object region 315 of each pixel 311 of the training data 31 and a corresponding region 355 of a corresponding pixel 351 of the background data 35. The object region 315 includes the object pixel 311 of the training data 31, and pixels 312 present in the surrounding of the object pixel 311. The object region 315 is defied for each pixel 311. In the example in Fig. 9, the object region 315 has the size of 3 x 3 including the object pixel 311 and eight pixels 312 present in the surrounding of the object pixel 311. Note, however, that the size and shape of the object region 315 are not limited to this example, and may be determined as appropriate as long as the object region 315 includes at least one pixel 312 present in the surrounding of the object pixel 311. The corresponding region 355 includes the pixel 351 that corresponds to the object pixel 311, and pixels 352 present in the surrounding of the pixel 351. The corresponding pixel 351 is present at the same position as the object pixel 311. The corresponding region 355 is defined at the same position and in the same range as those of the object region 315. A well-known calculation method such as a method for calculating a correlation coefficient may be used to calculate the correlation.

Then, based on the correlation calculated between the object region 315 and the corresponding region 355, the control unit 11 calculates a difference between each pixel 311 of the training data 31 and the corresponding pixel 351 of the background data 35. That is, the control unit 11 determines a difference result between the object pixel 311 and the corresponding pixel 351, based on the calculated correlation. The larger the calculated correlation is, the more likely it is that the object pixel 311 and the corresponding pixel 351 have the same background, and the lower the calculated correlation is, the more likely it is that the object pixel 311 shows an image (image other than the background, such as a feature of an object) different from the corresponding pixel 351. Based on this view point, the relationship between the calculated correlation and the difference result may be defined as appropriate. For example, a configuration is possible in which the control unit 11 compares the value of the calculated correlation and a threshold value, and generates the differential data 37 by employing the value of each pixel 311 as is if the value of the correlation is lower than the threshold value, and regarding the value of the object pixel as "0" if the value of the correlation is higher than the threshold value. The threshold value may be determined as appropriate. According to this method, it is possible to suppress information relating to a background from remaining in the differential data 37, even when the backgrounds between the background data 35 and the training data 31 slightly differ from each other, or when the backgrounds between the background data 35 and the training data 31 are shifted from each other within a range in which the correlation is calculated.

### [Step S124]

In step S124, the control unit 11 operates as the first training unit 114, and executes machine learning of the estimator 5 using the generated differential data 37. In the machine learning, the control unit 11 trains the estimator 5 so that, with respect to each of the learning data sets 30, a result of estimating a feature by the estimator 5 based on the generated differential data 37 conforms to the correct answer data 32.

As an example, first, the control unit 11 inputs, with respect to each of the learning data sets 30, the generated differential data 37 to the input layer 51 of the estimator 5, and executes computation processing of the estimator 5. With this, the control unit 11 obtains an output value that corresponds to a result of estimating a feature of an object included in the differential data 37, from the output layer 53 of the estimator 5. The control unit 11 calculates an error between the output value obtained from the output layer 53, and the corresponding correct answer data 32. Similarly to step S1021 and the like, an appropriate loss function may be used to calculate an error.

The control unit 11 uses the gradient of the calculated error with the back propagation method, and calculates errors of values of computation parameters of the estimator 5. The control unit 11 updates the values of the computation parameters of the estimator 5 based on the calculated errors. Similarly to step S1021 and the like, the degree of update of the values of the computation parameters may be adjusted based on a learning rate.

The control unit 11 adjusts, by the above-described series of update processing, the values of the computation parameters of the estimator 5 so that the sum of the calculated errors is small. Similarly to step S1021 and the like, the control unit 11 may repeatedly adjust the values of the computation parameters of the estimator 5 using the above-described series of update processing, until a predetermined condition is satisfied.

With this machine learning, the estimator 5 is trained to be able to appropriately estimate, with respect to each of the learning data sets 30, a feature of an object based on the differential data 37. Therefore, when, as a result of the machine learning, image data obtained based on a background difference is given, it is possible to construct the trained estimator 5 that has acquired the capability of estimating a feature of an object included in the given image data. Upon completion of the machine learning of the estimator 5, the control unit 11 moves the processing to the next step S125.

### [Step S125]

In step S125, the control unit 11 operates as the saving processing unit 119, and generates information relating to the trained estimator 5 constructed by machine learning, as the first learning result data 121. Then, the control unit 11 saves the generated first learning result data 121 in a predetermined storage area. A predetermined storage area may be, for example, the RAM of the control unit 11, the storage unit 12, an external storage device, a storage medium, or a combination thereof.

With this, after having completely saved the first learning result data 121, the control unit 11 ends the series of processing relating to machine learning of the estimator 5. Note that, similar to the second learning result data 122 and the like, the generated first learning result data 121 may be provided to the estimation apparatus 2 at an appropriate timing. Also, the processing in steps S121 to S125 may be repeated regularly or irregularly. Then, when the updated or newly generated first learning result data 121 is provided to the estimation apparatus 2 by an appropriate method, the first learning result data 121 held by the estimation apparatus 2 may be updated.

### [Estimation Apparatus]

Fig. 10 is a flowchart illustrating an example of a processing procedure of the estimation apparatus 2 according to the present embodiment. The processing procedure to be described below is an example of the "estimation method". Note, however, that the processing procedures to be described below are merely examples, and each step may be changed to the extent possible. Moreover, in the processing procedure to be described below, steps may also be omitted, replaced, or added as appropriate depending on the embodiment.

### [Step S201]

In step S201, the control unit 21 operates as the data acquisition unit 211, and acquires the object image data 41.

The object image data 41 is a sample of image data to be subjected to an estimation task. The object image data 41 may be acquired by an appropriate method. For example, the object image data 41 may be acquired by performing shooting relating to a feature of an object using a camera. The type of the camera may be appropriately selected. Also, the object image data 41 may be a still image or a moving image. Upon acquisition of the object image data 41, the control unit 21 moves the processing to the next step S202.

### [Step S202]

In step S202, the control unit 21 operates as the background acquisition unit 212, and acquires the object background data 45 that corresponds to the object image data 41.

The object background data 45 may be generated as appropriate. The object background data 45 may be generated by the same method as that used for the background data 35 in step S122. In the present embodiment, the control unit 21 may set the machine learned generator 60 and input estimator 62, with reference to the second learning result data 122 and the third learning result data 123. Then, by replacing the training data 31 by the object image data 41 and executing the same computation processing as that in step S122, the control unit 21 may acquire the object background data 45 that corresponds to the object image data 41 using the machine learned generator 60 and input estimator 62. Upon acquisition of the object background data 45, the control unit 21 moves the processing to the next step S203.

### [Step S203]

In step S203, the control unit 21 operates as the difference calculation unit 213, and obtains a difference between the object image data 41 and the object background data 45 to generate object differential data 47. The difference calculation method in this step S203 may be determined as appropriate, as long as information relating to a background included in the object image data 41 can be reduced based on the object background data 45. The difference calculation method in this step S203 may be the same as that in step S123. Upon generation of the object differential data 47, the control unit 21 moves the processing to the next step S204.

### [Step S204]

In step S204, the control unit 21 operates as the estimator 214, and estimates a feature included in the generated object differential data 47 using the machine learned estimator 5. In the present embodiment, the control unit 21 sets the machine learned estimator 5, with reference to the first learning result data 121. The control unit 21 inputs the generated object differential data 47 to the input layer 51 of the machine learned estimator 5, and executes computation processing of the machine learned estimator 5. With this, the control unit 21 can obtain an output value that corresponds to a result of estimating a feature of an object included in the object differential data 47, from the output layer 53 of the machine learned estimator 5. That is to say, in the present embodiment, estimating a feature included in the object image data 41 is realized by giving the object differential data 47 to the machine learned estimator 5 and obtaining the calculation result of the machine learned estimator 5. Upon completion of the estimation processing regarding a feature of an object, the control unit 21 moves the processing to the next step S205.

### [Step S205]

In step S205, the control unit 21 operates as the output unit 215, and outputs information relating to a result of estimating a feature of an object.

The content of destination and information to be output may be determined as appropriate depending on the embodiment. For example, the control unit 21 may directly output the estimation result of step S204 to the output apparatus 26. Also, for example, the control unit 21 may execute some sort of information processing based on a result of estimating a feature of an object. Then, the control unit 21 may output a result obtained by executing the information processing, as information relating to a result of estimation. Outputting a result obtained by executing the information processing may include outputting a specific message according to an estimation result, controlling the operation of an apparatus to be controlled according to an estimation result, and the like. The destination may be, for example, the output apparatus 26, an output apparatus of another computer, an apparatus to be controlled, or the like.

Upon completion of the output of information relating to an estimation result, the control unit 21 ends the processing procedure of the present operation example. Note that during a predetermined period in time, the control unit 21 may execute continuously and repeatedly the series of information processing in steps S201 to S205. The timing of the repetition may be set as appropriate. With this, the estimation apparatus 2 may continuously execute the estimation task relating to a feature of an object.

### [Features]

As described above, in the present embodiment, with steps S123 and S124, the estimator 5 is trained to estimate a feature of an object as in the correct answer data 32 based on training data 31 (differential data 37) from which the information on the background data 35 is removed. As a result, the machine learned estimator 5 can acquire the capability of executing an estimation task relating to a feature of an object, without using the information on the background data 35 that was removed by the difference calculation. That is to say, when the estimation task relating to a feature of an object is executed by the trained estimator 5, it is possible for the information corresponding to the background data 35 not to be taken into consideration. Thus, according to the model generation apparatus 1 of the present embodiment, it is possible to generate a trained estimator 5 that can execute an estimation task relating to a feature of an object included in image data, and is robust against differences in backgrounds. Also, in the estimation apparatus 2 according to the present embodiment, the generated trained estimator 5 can be used in step S204 to execute an estimation task relating to a feature of an object in a way that is robust against differences in backgrounds.

Also, in the training data 31 and the object image data 41 acquired in steps S121 and S201, there is a possibility that a variation may occur even with the same type of background due to, for example, a shift in the shooting position. To address this possibility, it is possible to construct the machine learned generator 60 for generating background data, with the processing in steps S101 to S103. By using this machine learned generator 60, it is possible to appropriately generate background data 35 and object background data 45 that respectively correspond to the training data 31 and the object image data 41, in steps S122 and S202, even when a variation occurs between the same type of background. Therefore, it is possible to reduce the cost for preparing the background data 35 and the object background data 45. Also, in step S124, it is possible to appropriately generate a trained estimator 5 that is robust against differences in backgrounds. In step S204, it is possible to execute an estimation task relating to a feature of an object in a way that is robust against differences in backgrounds.

### [Working Examples]

To verify the above-described effects, machine learned estimators according to a working example and a comparative example were constructed. Note, however, that the present invention is not limited to the following examples.

First, images (28 x 28, gray scale, and handwritten letters 0 to 9) of MNIST (Modified National Institute of Standards and Technology), and five types of background textures were prepared. By synthesizing the prepared MNIST images and background textures, training data for use in machine learning and test data for use in evaluation were created. Of the five types, four types of background textures have stripe patterns, and when the background textures were synthesized with the MNIST images, the positions of the patterns were changed randomly. The number of pieces of created training data was 60000, and the number of pieces of test data was 10000. By associating correct answer data indicating the synthesized letters (0 to 9) with the created training data, learning data sets were prepared. Also, by the same method as that of the above-described embodiment, a machine learned generator for creating background textures was created.

In the working example, by the same method as in the above-described embodiment, differential data was generated by calculating a difference between the background data that were generated by the machine learned generator, and the training data. Then, the generated differential data was used to construct the machine learned estimator that was trained to identify letters. During evaluation of the machine learned estimator, object differential data was generated by calculating a difference between the background data generated by the machine learned generator, and test data, using the same method as that for the estimation apparatus 2 according to the above-described embodiment. Then, the machine learned estimator was used to execute a task for identifying letters on the object differential data. On the other hand, in the comparative example, the training data was directly without removing the background used to construct the machine learned estimator trained to identify letters. During evaluation, the task of identifying letters on the test data was performed by the machine learned estimator. Note that in the working example and the comparative example, three types of estimators, namely, a linear discriminant model, a four-layer MLP (multilayer perceptron), and a convolution neural network, were prepared.

**[Table 1]**

| | Working example | Comparative example |
|---|---|---|
| Linear discriminant model | 84.7% | 75.6% |
| Four-layer MLP | 89.3% | 75.1% |
| CNN | 97.0% | 96.7% |

Table 1 shows correct answer rates of letter identification for test data in the working example and the comparative example. As shown in Table 1, for every model used as the estimator, the performance was higher in the working example than in the comparative example. Particularly, in a case where simple models such as the linear discriminant model and the four-layer MLP were used, it was possible to dramatically improve the performance of the machine learned estimators. According to the present invention, based on this result, it was verified that it is possible to construct a trained estimator that is robust against differences in backgrounds.

### 4. Modifications

Although the embodiment of the present invention has been described above in detail, the above descriptions are merely examples of the present invention in all aspects. Needless to say, various improvements or modifications can be made without departing from the scope of the present invention. For example, the following modifications are possible. Note that, in the following description, the same constituent elements as the constituent elements described in the above embodiment are assigned the same reference numerals, and descriptions of the same points as the points described in the above embodiment are omitted as appropriate. The following modifications may be combined as appropriate.

<4.1>
The estimation system 100 according to the above-described embodiment may be applied to any scenario of executing an estimation task relating to a feature of an object on image data. For example, the estimation system 100 according to the above-described embodiment is applicable to a scenario of estimating a feature included in a foreground of image data. The foreground may be constituted by suitable components that can be extracted from image data, separately from a background. A feature may be any information that can directly or indirectly derived from a foreground. Estimating a feature included in a foreground may be constituted by, for example, estimating the attribute of an object appearing in image data. In this case, the components linked to the origin of the attribute of the object is an example of the foreground. The range of the foreground may be determined as appropriate so that the attribute of the object can be derived. For example, the foreground may be a range in which an object appears. Alternatively, the foreground may also be a range that includes an object and the surrounding area of the object. Alternatively, the foreground may also be a partial range of an object in which the attribute of an object to be subjected to estimation is appearing. In the following, modifications in which the application scenario is limited will be illustrated.

### (A) Scenario of Visual Inspection

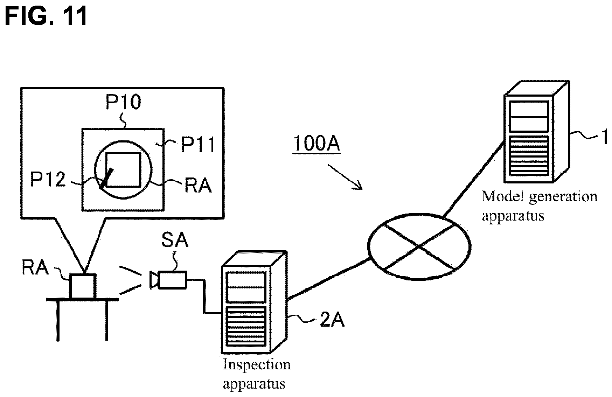

Fig. 11 schematically illustrates an example of a scenario to which an inspection system 100A according to a first modification is applied. This modification is an example in which the above-described embodiment is applied to a scenario of executing visual inspection of products using image data including images of products. The inspection system 100A according to the present modification includes the model generation apparatus 1 and an inspection apparatus 2A. Similarly to the above-described embodiment, the model generation apparatus 1 and the inspection apparatus 2A may be connected to each other via a network.

In the present modification, image data P10 including images of a product RA is dealt with as training data and object image data. The image data P10 may be obtained by shooting the product RA with a camera SA. A feature to be subjected to an estimation task may be a feature relating to a defect P12 of the product RA. A background P11 may be a portion other than the product RA, such as a seed of a conveyor. The background P11 may include a portion of the product RA other than the defect P12, such as a non-defective portion of the outer package of the product RA. Except for these limitations, the inspection system 100A according to the present modification may be configured similarly to the estimation system 100 according to the above-described embodiment.

Note that the product RA may be a product conveyed by a production line, such as an electronic device, an electronic component, an automobile component, a drug, or food, for example. The electronic component may be, for example, a substrate, a chip capacitor, a liquid crystal, a winding of a relay, or the like. The automobile component may be, for example, a con rod, a shaft, an engine block, a power window switch, a panel, or the like. The drug may be, for example, a packed pill, an unplaced pill, or the like. The product RA may be a final product generated after the completion of a production process, an intermediate product generated during the production process, or an initial product prepared before the production process. The defect P12 may be, for example, a blemish, an impurity, a crack, a dent, a burr, color irregularity, a contamination, or the like. Estimating relating to the defect P12 may be expressed by, for example, determining whether or not the product RA includes the defect P12, determining the probability that the product RA includes the defect P12, identifying the type of the defect P12 included in the product RA, specifying the range of the defect P12 included in the product RA, or a combination thereof.

### [Model Generation Apparatus]

In the present modification, the model generation apparatus 1 acquires, in step S101, the learning background data 39 including images of the background P11. Then, the model generation apparatus 1 executes the processing in steps S102 and S103 to generate the machine learned generator 60 that has acquired the capability of generating pseudo background data including images of the background P11, and saves the second learning result data 122 in a predetermined storage area. The model generation apparatus 1 executes the processing in steps S111 to S113 to generate the machine learned input estimator 62, and saves the third learning result data 123 in a predetermined storage area.

Also, the model generation apparatus 1 acquires, in step S121, the plurality of learning data sets 30 each constituted by a combination of training data 31 including images of the product RA, and the correct answer data 32, which indicates information (correct answer) relating to the defect P12 of the products RA appearing in the training data 31. The information relating to the defect P12 may include, for example, information relating to whether or not there is the defect P12, the type of the defect P12, the range of the defect P12, and the like. The model generation apparatus 1 executes the processing in steps S122 to S125 to generate the machine learned estimator 5 that has acquired the capability of executing estimation relating to the defect P12, and saves the first learning result data 121 in a predetermined storage area. The generated first to third pieces of learning result data 121 to 123 may be provided to the inspection apparatus 2A at an appropriate timing.

### [Inspection Apparatus]

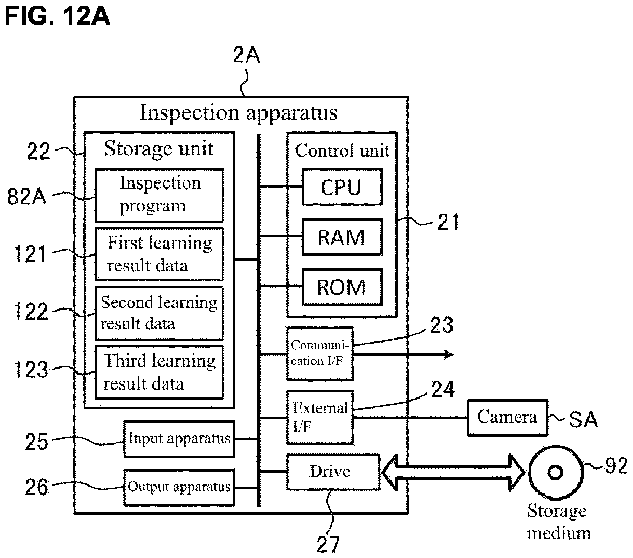

Fig. 12A schematically illustrates an example of a hardware configuration of the inspection apparatus 2A according to the present modification. As shown in Fig. 12A, the inspection apparatus 2A according to the present modification, similar to the estimation apparatus 2, may be constituted by a computer in which the control unit 21, the storage unit 22, the communication interface 23, the external interface 24, the input apparatus 25, the output apparatus 26, and the drive 27 are electrically connected to each other.

In the present modification, the storage unit 22 stores various types of information such as an inspection program 82A and the first to third pieces of learning result data 121 to 123. The inspection program 82A corresponds to the estimation program 82 according to the above-described embodiment. At least one of the inspection program 82A and the first to third pieces of learning result data 121 to 123 may be stored in the storage medium 92. Also, in the present modification, the inspection apparatus 2A is connected to the camera SA via the external interface 24. The camera SA may be a commonly-used RGB camera, a depth camera, an infrared camera, or the like. The camera SA may be placed appropriately at a position at which it can shoot the product RA. For example, the camera SA may be placed in the surrounding area of a conveyor apparatus that conveys the products RA.

Note that the hardware configuration of the inspection apparatus 2A is not limited to this example. Constituent elements of the specific hardware configuration of the inspection apparatus 2A can be omitted, replaced, and added as appropriate depending on the embodiment. Also, the inspection apparatus 2A may be a general-purpose server apparatus, a general-purpose PC, a PLC, or the like, instead of an information processing apparatus that is specifically designed for the service to be provided.

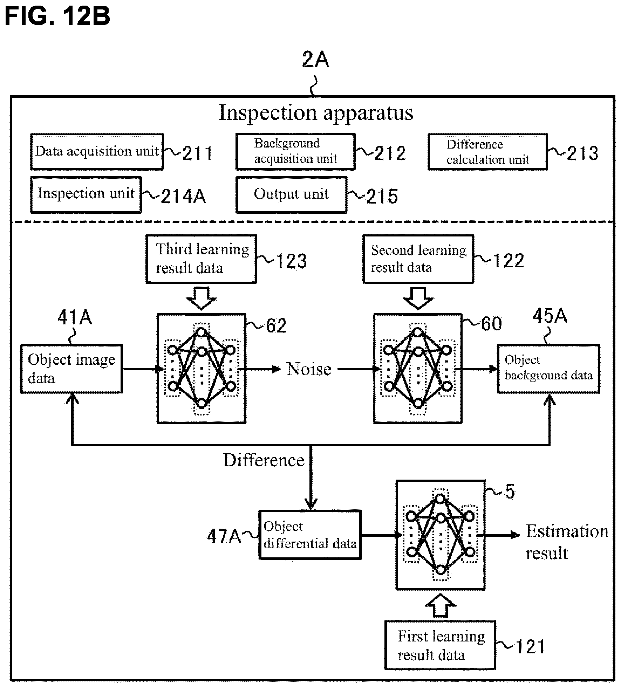

Fig. 12B schematically illustrates an example of a software configuration of the inspection apparatus 2A according to the present modification. Similarly to the above-described embodiment, the software configuration of the inspection apparatus 2A is realized by the control unit 21 executing the inspection program 82A. The software configuration of the inspection apparatus 2A is the same as that of the estimation apparatus 2 except for the configuration in which data to be dealt with is limited as described above. An inspection unit 214A corresponds to the above-described estimation unit 214. With this, the inspection apparatus 2A can execute a series of information processing relating to visual inspection, similarly to the estimation processing of the estimation apparatus 2.

That is to say, in step S201, the control unit 21 acquires object image data 41A of images of the product RA to be inspected. In step S202, the control unit 21 acquires the object background data 45A that corresponds to the object image data 41A. In the present modification, using the machine learned generator 60 and input estimator 62, the control unit 21 can acquire the object background data 45A that corresponds to the background P11 included in the object image data 41A. In step S203, the control unit 21 generates object differential data 47A, by obtaining a difference between the object image data 41A and the object background data 45A. In step S204, the control unit 21 operates as the inspection unit 214A, and gives the generated object differential data 47A to the machine learned estimator 5 to execute the computation processing of the machine learned estimator 5. With this, the control unit 21 acquires an output value that corresponds to a result of estimating the defect P12 of the product RA included in the object image data 41A, from the machine learned estimator 5.

In step S205, the control unit 21 outputs information relating to a result of estimating the defect P12 of the product RA. For example, the control unit 21 may directly output a result of estimating the defect P12 of the product RA to the output apparatus 26. Also, for example, if it is determined that the product RA includes a defect P12, the control unit 21 may output a warning for notifying this fact to the output apparatus 26. Also, when the inspection apparatus 2A is connected to a conveyor apparatus for conveying the products RA, the control unit 21 may control the conveyor apparatus such that products RA including no defect P12 and products RA including a defect P12 are conveyed on different lines based on the result of estimating the defect P12, for example.

### [Features]

According to the present modification, by machine learning of the model generation apparatus 1, it is possible to train the estimator 5 to execute an estimation task relating to a defect P12, without using the information on the background P11 that was removed through the difference calculation. Accordingly, it is possible to generate the machine learned estimator 5 that can execute an estimation task relating to the defect P12 in a way that is robust against differences in backgrounds P11. According to the inspection apparatus 2A of the present modification, it can be expected that an estimation task (that is, visual inspection) relating to the defect P12 is accurately executed using the machine learned estimator 5.

### [Other Considerations]

In the above-described first modification, the product RA is an example of an object, and information relating to a defect P12 is an example of the attribute of the object. An object and its attribute are not limited to the product RA and information relating to a defect P12, and may be selected as appropriate depending on the embodiment. That is, the estimation system 100 according to the above-described embodiment may be applied to various scenarios of estimating the attribute of a suitable object appearing in image data. In this case, in the estimation system 100, image data of images of objects may be dealt with as the training data 31 and the object image data 41. A feature of an object may be a feature relating to the attribute of the object. With this, it is possible to generate the machine learned estimator 5 that can execute an estimation task relating to the attribute of an object in a way that is robust against differences in backgrounds.

Also, if the portion other than products RA is regarded as the background P11, the portion of images of the products RA is an example of a foreground. Alternatively, if the portion other than defects P12 of products RA is regarded as the background P11, the range in which defects P12 appear is an example of a foreground. The foreground and the background are not limited to such examples, and may be selected as appropriate depending on the embodiment. That is, the estimation system 100 according to the above-described embodiment may be applied to various scenarios of estimating a feature included in a suitable foreground appearing in image data. In this case, a predetermined type of data may be image data including the foreground and the background. In this case, image data of images of foregrounds and backgrounds may be dealt with as the training data 31 and the object image data 41. A feature of an object may be a feature relating to a foreground. Suitable components that can be extracted from image data may be selected as the foreground. With this, it is possible to generate the machine learned estimator 5 that can execute an estimation task relating to a foreground in a way that is robust against differences in backgrounds.

### (B) Scenario of Identifying Symbols on Number Plate

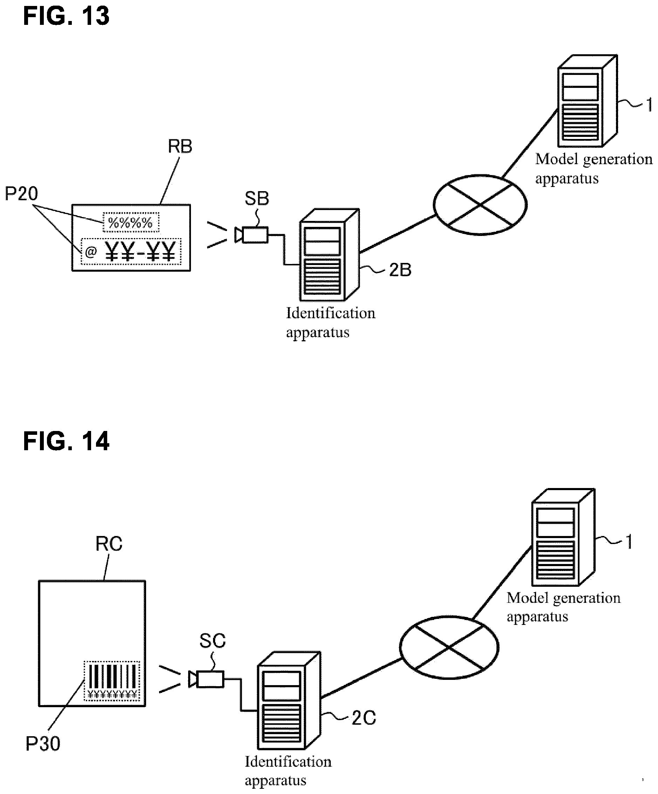

Fig. 13 schematically illustrates an example of another scenario of estimating the attribute of an object appearing in image data. An identification system exemplified in Fig. 13 includes the model generation apparatus 1 and an identification apparatus 2B. The identification apparatus 2B corresponds to the above-described inspection apparatus 2A. The configuration of the identification apparatus 2B may be the same as that of the inspection apparatus 2A. In the example of Fig. 13, image data of images of number plates RB may be dealt with as training data and object image data. As in the above-described inspection system 100A, a camera SB may be used to acquire the image data.

In this case, a feature to be subjected to an estimation task may be a feature relating to a symbol P20 added to the number plate RB. The number plate RB is an example of an object. A background may be a region other than the symbol P20. A foreground may be a region of images of the symbol P20. The symbol P20 may be constituted by numeric characters, letters, marks, figures, or a combination thereof, for example. The background of the number plate RB may include decoration such as designs and drawing patterns. Estimating a feature of an object may be identifying the symbol P20.

With this, the model generation apparatus 1 can generate the machine learned estimator 5 that can identify the symbol P20 added to the number plate RB in a way that is robust against differences in backgrounds. The identification apparatus 2B can identify the symbol P20 of the number plate RB included in object image data by the same procedure as that for the above-described inspection apparatus 2. The identification system according to the present modification may be used in any scenario of identifying the symbol P20 of the number plate RB. For example, the identification system according to the present modification may be used to identify automobiles traveling on a road from image data acquired by a monitoring camera for monitoring automobiles traveling on the road.

Note that in a scenario of monitoring automobiles traveling on a road, the identification apparatus 2B may identify the symbol P20 of the number plate RB with respect to object image data obtained as a time series (chronologically), by the processing in step S201 to S204. Then, the identification apparatus 2B may generate history information indicating chronological results of identifying automobiles traveling on a road, which are objects, based on the symbols P20 by the processing in step S205.

### (C) Scenario of Identifying Symbol Added to Package of Product

Fig. 14 schematically illustrates an example of another scenario of estimating the attribute of an object included in image data. An identification system exemplified in Fig. 14 includes the model generation apparatus 1 and an identification apparatus 2C. The identification apparatus 2C corresponds to the above-described inspection apparatus 2A. The configuration of the identification apparatus 2C may be the same as that of the inspection apparatus 2A. In the example of Fig. 14, image data of images of packages RC of products may be dealt with as training data and object image data. As in the above-described inspection system 100A, a camera SC may be used to acquire the image data.

In this case, a feature to be subjected to an estimation task may be a feature relating to a symbol P30 added to the package RC. The package RC is an example of an object. A background may be a region other than the symbol P30. A foreground may be a region of images of the symbol P30. The symbol P30 may be constituted by numeric characters, letters, marks, figures, codes, or a combination thereof, for example. Codes may be, for example, one-dimensional codes, two-dimensional codes, or the like. The background of the package RC may include decoration such as designs and drawing patterns. Estimating a feature of an object may be identifying the symbol P30.

With this, the model generation apparatus 1 can generate the machine learned estimator 5 that can identify the symbol P30 added to the package RC in a way that is robust against differences in backgrounds. The identification apparatus 2C can identify the symbol P30 added to the package RC included in object image data in the same procedure as that for the inspection apparatus 2A. The identification system according to the present modification may be used in any scenario of identifying the symbol P30 added to the package RC. For example, the identification system according to the present modification may be used to identify a product conveyed in a production line.

### (D) Scenario of Estimating Attribute of Moving Object

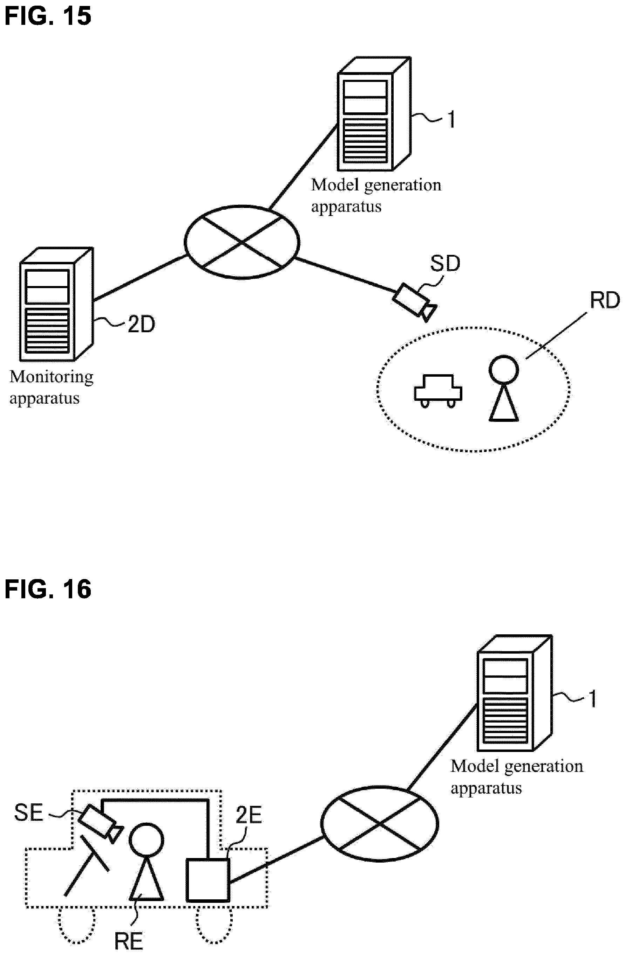

Fig. 15 schematically illustrates an example of another scenario of estimating the attribute of an object included in image data. A monitoring system exemplified in Fig. 15 includes the model generation apparatus 1 and a monitoring apparatus 2D. The monitoring apparatus 2D corresponds to the above-described inspection apparatus 2A. The configuration of the monitoring apparatus 2D may be the same as that of the inspection apparatus 2A. In the example of Fig. 15, image data acquired by shooting ranges in which a moving object RD can be present may be dealt with as training data and object image data. A camera SD arranged so as to shoot a range to be monitored may be used to acquire the image data. A range to be monitored may be determined based on an appropriate place such as a road, or a building, for example. The monitoring apparatus 2D may be appropriately connected to the camera SD via a network, for example. With this, the monitoring apparatus 2D can acquire image data of images of a range to be monitored.

In this case, a feature to be subjected to an estimation task may be a feature relating to the attribute of the moving object RD. The moving object RD is an example of an object. The attribute of the moving object RD may include a range (bounding box) of images of the moving object RD, identification information of the moving object RD, the state of the moving object RD, and the like. The state of the moving object RD may include, for example, the position, the number, the degree of crowd (congestion degree or density), the speed, the acceleration, and the like. In addition, the state of the moving object RD may include, for example, the possibility (degree of danger) that the moving object RD encounters a danger such as an accident or a crime. The type of danger that the moving object RD can encounter may be determined as appropriate. Furthermore, if the moving object RD is a person, the identification information of the moving object RD may include, for example, the identifier of the person, name, sex, age, physical size, and the like. Also, the state of the moving object RD may include, for example, movements of a person, posture of the person, and the like. The background may be a region of images of objects other than the moving object RD, such as a road and a building. The foreground may be a region in which the moving object RD appears. Alternatively, the foreground may also be a region that includes the moving object RD and the surrounding area of the moving object RD. In this case, the background may be a region outside the surrounding area of the moving object RD.

With this, the model generation apparatus 1 can generate a machine learned estimator 5 that can estimate the attribute of the moving object RD in a way that is robust against differences in backgrounds. The monitoring apparatus 2D can estimate the attribute of the moving object RD in a shooting rage of the camera SD by the same procedure as that for the inspection apparatus 2A. The monitoring system according to the present modification may be used in any scenario of monitoring the moving object RD. For example, the monitoring system according to the present modification may be used, for example, in a scenario of monitoring the congestion degree of the moving objects RD in a road or a building, a scenario of monitoring a forecast that a person falls from the platform of a station, or a scenario of monitoring a forecast that a person walking on the street encounters a crime. Note that the format of an output of an estimation result may be determined as appropriate. For example, in a scenario of estimating the degree of danger of the moving object RD, the monitoring apparatus 2D may output a warning according to the estimated degree of danger in step S205.

### (E) Scenario of Monitoring State of Driver

Fig. 16 schematically illustrates an example of another scenario of estimating the attribute of an object included in image data. A monitoring system exemplified in Fig. 16 includes the model generation apparatus 1 and a monitoring apparatus 2E. The monitoring apparatus 2E corresponds to the above-described inspection apparatus 2A. The configuration of the monitoring apparatus 2E may be the same as that of the inspection apparatus 2A. In the example of Fig. 16, image data of images of drivers RE may be dealt with as training data and object image data. As in the above-described inspection system 100A, a camera SE may be used to acquire the image data. The camera SE may be placed appropriately so as to shoot a driver RE assumed as being present on the driver's seat.

In this case, a feature to be subjected to an estimation task may be a feature relating to a state of the driver RE. The driver RE is an example of an object. The state of the driver RE may include, for example, health condition, sleepiness degree, fatigue degree, composure degree, and the like. The health condition may be expressed by, for example, the probability that a predetermined disorder occurs, the probability that the physical condition changes, and the like. The sleepiness degree indicates the degree of sleepiness of the driver RE. The fatigue degree indicates the degree of fatigue of the driver RE. The composure degree indicates the degree of composure of the driver RE to driving. The background may be, for example, a region other than the region involved in the state of the driver RE, such as a car interior landscape. The foreground may be the region involved in the state of the driver RE. The region involved in the state of the driver RE may be, for example, a region of images of the driver RE, a region further including the surrounding area of the driver RE, a region of image of a portion (e.g., a suitable body portion) of the driver RE, a region of images of tools (e.g., a steering wheel) associated with driving, and the like.

With this, the model generation apparatus 1 can generate the machine learned estimator 5 that can estimate the state of the driver RE in a way that is robust against differences in backgrounds. The monitoring apparatus 2E can estimate the state of the driver RE included in object image data by the same procedure as that for the inspection apparatus 2A. The monitoring system according to the present modification may be used in any scenario of monitoring the state of the driver RE. Moreover, the monitoring system according to the present modification may be used for an object person other than the driver RE. An example of the object persons other than the driver RE may be an operator operating in an office or a factory.

Note that the format of an output of a result of estimating the state of the driver RE in step S205 may be determined as appropriate. As an example, when at least one of the sleepiness degree and the fatigue degree is estimated, the monitoring apparatus 2E may determine whether or not at least one of the estimated sleepiness degree and fatigue degree exceeds a threshold value. If at least one of the sleepiness degree and the fatigue degree exceeds a threshold value, the monitoring apparatus 2E may output, to the output apparatus, a warning that prompts the driver RE to park the automobile at a parking area and take a rest. In this way, the monitoring apparatus 2E may output a specific message such as a warning to the output apparatus, depending on the estimated state of the driver RE.

As another example, if an automobile is provided with a control device (not shown) that controls automated driving operations, the monitoring apparatus 2E may transmit, to the control device, an instruction that instructs automated driving operations of the automobile, based on a result of estimating the state of the driver RE. As a specific example, a configuration is assumed in which switching is possible between an automated driving mode in which the control device controls traveling of an automobile, and a manual driving mode in which traveling of the automobile is controlled by steering of the driver RE. In this case, when an automobile is traveling in the automated driving mode, and an instruction to switch from the automated driving mode to the manual driving mode is accepted from the driver RE or a system, the monitoring apparatus 2E may determine whether or not the estimated composure degree of the driver RE exceed a threshold value. If the composure degree of the driver RE exceeds the threshold value, the monitoring apparatus 2E may transmit, to the control device, an instruction to allow switching from the automated driving mode to the manual driving mode. If the composure degree of the driver RE is less than or equal to the threshold value, the monitoring apparatus 2E may transmit, to the control device, a notification of not allowing the switching from the automated driving mode to the manual driving mode, and maintain the traveling in the automated driving mode.

Also, when the automobile is traveling in the manual driving mode, the monitoring apparatus 2E may determine whether or not at least one of the estimated sleepiness degree and fatigue degree exceeds a threshold value. If at least one of the sleepiness degree and the fatigue degree exceeds the threshold value, the monitoring apparatus 2E may transmit, to the control device, an instruction to switch from the manual driving mode to the automated driving mode, and to park the automobile at a safe place such as a parking area. Otherwise, the monitoring apparatus 2E may maintain the traveling of the automobile in the manual driving mode.

Also, when the automobile is traveling in the manual driving mode, the monitoring apparatus 2E may determine whether or not the estimated composure degree is less than or equal to the threshold value. If the composure degree is less than or equal to the threshold value, the monitoring apparatus 2E may transmit, to the control device, an instruction to reduce the speed. Otherwise, the monitoring apparatus 2E may maintain the traveling of the automobile by operations of the driver RE. Note that the control device of the automobile and the monitoring apparatus 2E may be constituted by the same computer.

<4.2>
In the above-described embodiment, in steps S122 and S202, the background data 35 and the object background data 45 can be acquired using the machine learned generator 60. However, the method for acquiring both pieces of background data (35, 45) is not limited to this example. For example, background data that can be used as both pieces of background data (35, 45) may be prepared in advance. In this case, the background data may be stored in the storage unit (12, 22), the storage medium (91, 92), an external storage apparatus, or the like. In steps S122 and S202, background data including the same types of backgrounds as those of the training data 31 and the object image data 41 may be appropriately selected as the pieces of background data (35, 45) from the background data prepared in advance. As an example, the background data to be used may be selected by an operator. Alternatively, background data most similar to the training data 31 and the object image data 41 may be selected as the background data (35, 45).

<4.3>
In the present embodiment, the discriminator 61 is used to train the generator 60. The model generation apparatus 1 executes adversarial learning between the generator 60 and the discriminator 61 to construct the machine learned generator 60 that has acquired the capability of generating the pseudo background data 633 that conforms to the learning background data 39. However, the method for generating the machine learned generator 60 is not limited to this example, as long as the generator 60 can be trained to generate pseudo background data including images of backgrounds given by the learning background data 39.

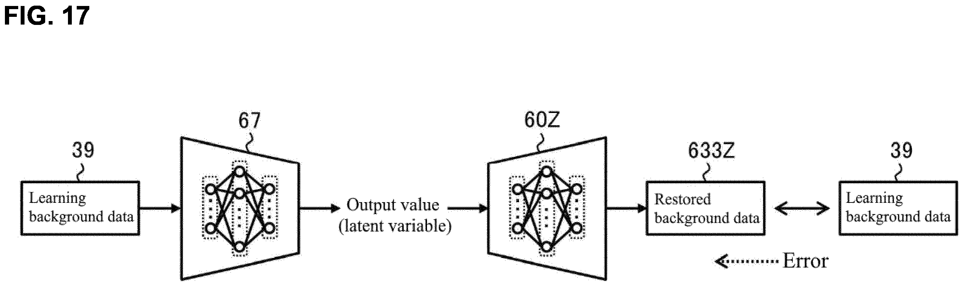

Fig. 17 schematically illustrates an example of a configuration of a generator 60Z according to the present modification. In the present modification, the generator 60Z is trained together with an encoder 67. The encoder 67 is configured to convert image data into feature amounts. The generator 60Z operates as a decoder configured to restore the image data from the feature amounts. The feature amounts obtained by the encoder 67 corresponds to the noise (latent variable) described in the above-described embodiment. The encoder 67 corresponds to the above-described input estimator 62. The format of feature amounts is not particularly limited, and may be determined as appropriate.

The encoder 67 and the generator 60Z are each configured by a machine learning model. The type of the machine learning model constituting each of the components above may be selected as appropriate. As in the above-described embodiment, neural networks may be used as the encoder 67 and the generator 60Z. If neural networks are used as the encoder 67 and the generator 60Z, the model generation apparatus 1 can execute machine learning in step S102, in the following manner.

That is, the control unit 11 inputs the learning background data 39 to the encoder 67, and executes computation processing of the encoder 67. With this, the control unit 11 obtains an output value that corresponds to a result of converting the learning background data 39 into feature amounts, from the encoder 67. Then, the control unit 11 inputs the feature amounts acquired from the encoder 67 to the generator 60Z, and executes computation processing of the generator 60Z. With this, the control unit 11 acquires an output value that corresponds to restored background data 633Z restored from the feature amounts, from the generator 60Z.

The control unit 11 calculates errors between the obtained restored background data 633Z and the learning background data 39. The control unit 11 uses the gradient of the calculated errors with the back propagation method, and calculates errors of values of computation parameters between the encoder 67 and the generator 60Z. The control unit 11 updates values of the computation parameters of the encoder 67 and the generator 60Z based on the calculated errors. The control unit 11 adjusts, by the above-described series of update processing, the values of the computation parameters of the encoder 67 and the generator 60Z so that the sum of the calculated errors is small. Note that in addition to the update processing, the control unit 11 may calculate errors between the feature amounts acquired from the encoder 67 and a predetermined probability distribution (such as, e.g., a Gaussian distribution), and further adjust the values of the computation parameters of the encoder 67 so that the sum of the calculated errors is small. With this, the control unit 11 may normalize the output value of the encoder 67.

With the above-described machine learning, it is possible to construct a trained encoder 67 that has acquired the capability of converting image data into appropriate feature amounts according to a background. With this, it is possible to construct a trained generator 60Z that has acquired the capability of generating the pseudo background data including images of the corresponding background from the feature amounts. In this case, the machine learned encoder 67 can be used as the machine learned input estimator 62. Therefore, in the present modification, the processing in steps S111 to S113 may be omitted.

In the step S122, the control unit 11 gives the training data 31 to the machine learned encoder 67, and executes computation processing of the machine learned encoder 67 and generator 60Z. With this, the control unit 11 can acquire the background data 35 generated corresponding to the training data 31 from the machine learned generator 60Z. Similarly, in step S202, the control unit 21 gives the object image data 41 to the machine learned encoder 67, and executes computation processing of the machine learned encoder 67 and generator 60Z. With this, the control unit 21 can obtain the object background data 45 generated corresponding to the object image data 41, from the machine learned generator 60Z.

As another example, machine learning of the generator 60 may be constituted by main component analysis. In this case, the machine learned generator 60 may be configured by proper vectors derived by the main component analysis. More specifically, the machine learned generator 60 may be configured by projection matrix "UU^{T}" using proper vectors U. Components of the proper vectors are examples of the computation parameters of the generator 60. In steps S122 and S202, by converting the training data 31 and the object image data 41 using the projection matrix, it is possible to obtain the corresponding background data 35 and object background data 45.

<4.4>
In the present embodiment, each of the estimator 5, the generator 60, the discriminator 61, and the input estimator 62 is constituted by a fully connected neural network. However, the type of the neural network constituting each component is not limited to this example. For example, a convolution neural network, a recurrent neural network, or the like may be used as the estimator 5, the generator 60, the discriminator 61, and/or the input estimator 62.

Also, the types of the machine learning models constituting the estimator 5, the generator 60, the discriminator 61, and the input estimator 62 are not limited to a neural network. For example, the generator 60 may be configured by projection matrix using proper vectors U, as described above. Also, instead of a neural network, for example, a support vector machine, a regression model, a decision tree model, or the like may be used as the estimator 5, the discriminator 61, and/or the input estimator 62. The method of machine learning may be selected as appropriate according to the type of each machine learning model.

Also, in the above-described embodiment, the formats of inputs and outputs of the estimator 5, the generator 60, the discriminator 61, and the input estimator 62 are not particularly limited, and may be determined as appropriate depending on the embodiment. For example, each of the generator 60 and the discriminator 61 may be configured to further accept an input of information indicating the type of a background. With this, it is possible to control the type of the background included in the pseudo background data generated by the machine learned generator 60, based on the input value (information indicating the type of the background) given to the machine learned generator 60.

Also, in the above-described embodiment, the machine learned generator 60 and input estimator 62 may be generated by a computer other than the model generation apparatus 1. If the machine learned generator 60 is not generated by the model generation apparatus 1, the second data acquisition unit 115 and the second training unit 116 may be omitted from the software configuration of the model generation apparatus 1. The processing in steps S101 to S103 may be omitted from the processing procedure of the model generation apparatus 1. Also, if the machine learned input estimator 62 is not generated by the model generation apparatus 1, the third data acquisition unit 117 and the third training unit 118 may be omitted from the software configuration of the model generation apparatus 1. The processing in steps S111 to S113 may be omitted from the processing procedure of the model generation apparatus 1. Also, if information relating to a machine learned machine learning model is not saved, the saving processing unit 119 may be omitted from the software configuration of the model generation apparatus 1. The processing of steps S103, S113, and S205 may be omitted from the processing procedure of the model generation apparatus 1.

### INDEX TO THE REFERENCE NUMERALS

- 1: Model generation apparatus
- 11: Control unit
- 12: Storage unit
- 13: Communication interface
- 14: External interface
- 15: Input apparatus
- 16: Output apparatus
- 17: Drive
- 111: First data acquisition unit
- 112: Background acquisition unit
- 113: Difference calculation unit
- 114: First training unit
- 115: Second data acquisition unit
- 116: Second training unit
- 117: Third data acquisition unit
- 118: Third training unit
- 119: Saving processing unit
- 121: First learning result data
- 122: Second learning result data
- 123: Third learning result data
- 81: Model generation program
- 91: Storage medium
- 2: Estimation apparatus
- 21: Control unit
- 22: Storage unit
- 23: Communication interface
- 24: External interface
- 25: Input apparatus
- 26: Output apparatus
- 27: Drive
- 211: Data acquisition unit
- 212: Background acquisition unit
- 213: Difference calculation unit
- 214: Estimation unit
- 215: Output unit
- 82: Estimation program
- 92: Storage medium
- 30: Learning data set
- 31: Training data
- 32: Correct answer data
- 35: Background data
- 37: Differential data
- 39: Learning background data
- 41: Object image data
- 45: Object background data
- 47: Object differential data
- 5: Estimator
- 60: Generator
- 61: Discriminator
- 62: Input estimator

## Claims

1. A model generation apparatus comprising:
a first data acquisition unit configured to acquire a plurality of learning data sets each constituted by a combination of training data that is image data, and correct answer data that indicates a feature included in the training data;
a background acquisition unit configured to acquire, with respect to each of the learning data sets, background data that indicates a background of the training data;
a difference calculation unit configured to obtain, with respect to each of the learning data sets, a difference between the acquired background data and the training data to generate differential data that indicates the difference between the background data and the training data; and
a first training unit configured to execute machine learning of an estimator, the execution of the machine learning of the estimator including training the estimator so that, with respect to each of the learning data sets, a result of estimating the feature by the estimator based on the generated differential data conforms to the correct answer data.

2. The model generation apparatus according to claim 1,
wherein acquiring the background data includes generating the background data for the training datawith respect to each of the learning data sets, using a machine learned generator.

3. The model generation apparatus according to claim 2, further comprising:
a second data acquisition unit configured to acquire learning background data; and
a second training unit configured to execute machine learning using the acquired learning background data, and construct the machine learned generator trained to generate the background data for the training data.

4. The model generation apparatus according to any one of claims 1 to 3,
wherein the difference calculation unit is configured to generate the differential data by obtaining, based on correlation between an object region including pixels of the training data and pixels surrounding these pixels, and a corresponding region including corresponding pixels of the background data and pixels surrounding these pixels, a difference between each of the pixels of the training data and a corresponding pixel of the background data.

5. The model generation apparatus according to any one of claims 1 to 4, wherein the feature relates to a foreground of the training data.

6. The model generation apparatus according to any one of claims 1 to 4,
wherein the training data is image data including an image of an object, and
the feature is an attribute of the object.

7. The model generation apparatus according to claim 6,
wherein the object is a product, and
the attribute of the object relates to a defect of the product.

8. An estimation apparatus comprising:
a data acquisition unit configured to acquire object image data;
a background acquisition unit configured to acquire object background data that corresponds to the object image data;
a difference calculation unit configured to obtain a difference between the object image data and the object background data to generate object differential data;
an estimation unit configured to estimate a feature included in the generated object differential data, using a machine learned estimator generated by the model generation apparatus according to any one of claims 1 to 7; and
an output unit configured to output information relating to a result of estimating the feature.

9. A model generation method in which a computer executes:
a step of acquiring a plurality of learning data sets each constituted by a combination of training data that is image data, and correct answer data that indicates a feature included in the training data;
a step of acquiring, with respect to each of the learning data sets, background data that indicates a background of the training data;
a step of obtaining, with respect to each of the learning data sets, a difference between the acquired background data and the training data to generate differential data that indicates the difference between the background data and the training data; and
a step of executing machine learning of an estimator, the execution of the machine learning of the estimator including training the estimator so that, with respect to each of the learning data sets, a result of estimating a feature by the estimator based on the generated differential data conforms to the correct answer data.

10. A model generation program for causing a computer to execute:
a step of acquiring a plurality of learning data sets each constituted by a combination of training data that is image data, and correct answer data that indicates a feature included in the training data;
a step of acquiring, with respect to each of the learning data sets, background data that indicates a background of the training data;
a step of obtaining, with respect to each of the learning data sets, a difference between the acquired background data and the training data to generate differential data that indicates the difference between the background data and the training data; and
a step of executing machine learning of an estimator, the execution of the machine learning of the estimator including training the estimator so that, with respect to each of the learning data sets, a result of estimating a feature by the estimator based on the generated differential data conforms to the correct answer data.
